# EUROPEAN PATENT APPLICATION

(11) **EP 4 783 707 A1**
(43) Date of publication of application: **29.07.2026**
(21) Application number: 24870911.5
(22) Date of filing: 26.09.2024
(51) Int. Cl.: H04W 72/40

(54) **SIDELINK COMMUNICATION METHOD AND APPARATUS**

(30) Priority: 28.09.2023 CN 202311284042
(71) Applicant: HUAWEI TECHNOLOGIES CO., LTD., Shenzhen, Guangdong 518129 (CN)
(72) Inventor: HUANG, Haining, Shenzhen, Guangdong 518129 (CN); YANG, Fan, Shenzhen, Guangdong 518129 (CN); LI, Junyao, Shenzhen, Guangdong 518129 (CN); ZHANG, Tianhong, Shenzhen, Guangdong 518129 (CN)
(74) Representative: Maiwald GmbH
(86) International application number: PCT/CN2024/121576
(87) International publication number: WO 2025/067372

(57) **Abstract**

A sidelink communication method and an apparatus are provided. A terminal device determines N RB sets or S RB sets from RB sets on which M PSFCHs are located, where N and S are positive integers. When N is greater than 1, the N RB sets are contiguous RB sets. When S is greater than 1, the S RB sets are non-contiguous RB sets. The terminal device sends PSFCHs on the N RB sets or the S RB sets. The terminal device determines, based on a capability for transmitting PSFCHs on contiguous frequency domain resource units or non-contiguous frequency domain resource units, one RB set or a plurality of contiguous RB sets or a plurality of non-contiguous RB sets to send PSFCHs, and the finally sent PSFCHs satisfy the capability of the terminal device for transmitting PSFCHs, thereby ensuring that the terminal device efficiently sends the PSFCHs.

## Description

### CROSS-REFERENCE TO RELATED APPLICATIONS

This application claims priority to Chinese Patent Application No. 202311284042.8, filed with the China National Intellectual Property Administration on September 28, 2023 and entitled "SIDELINK COMMUNICATION METHOD AND APPARATUS", which is incorporated herein by reference in its entirety.

### TECHNICAL FIELD

This application relates to the field of communication technologies, and in particular, to a sidelink communication method and an apparatus.

### BACKGROUND

The 3rd generation partnership project (3rd generation partnership project, 3GPP) defines a sidelink (sidelink, SL) communication technology, and a typical application scenario includes vehicle-to-everything (vehicle-to-everything, V2X).

In SL communication, a terminal device may transmit feedback information through a physical sidelink feedback channel (physical sidelink feedback channel, PSFCH). The feedback information may include a conflict indication, and the feedback information may also include acknowledgment (acknowledgment, ACK)/negative acknowledgment (negative acknowledgment, NACK) information. For example, for one time of PSSCH transmission, if a data sending terminal includes physical layer hybrid automatic repeat request (hybrid automatic repeat request, HARQ)-ACK feedback enabling information in control information, a data receiving terminal feeds back corresponding ACK/NACK information based on a current PSSCH decoding result.

In a current PSFCH sending rule, when the terminal device has M to-be-sent PSFCHs, the terminal device needs to determine, based on priority values of the M PSFCHs, finally sent PSFCHs. A priority value of a PSFCH is a priority value of a PSSCH corresponding to the PSFCH. However, in this sending rule, a capability of the terminal device for sending PSFCHs is not considered.

### SUMMARY

Embodiments of this application provide a sidelink communication method and an apparatus, to improve efficiency of a terminal device in sending PSFCHs.

According to a first aspect, a sidelink communication method is provided. The method may be applied to a terminal device, or may be applied to a module in a terminal device. The following uses an example on which the method is applied to a terminal device for description. In the method, a capability of the terminal device for transmitting PSFCHs on contiguous frequency domain resources and/or non-contiguous frequency domain resources is: The terminal device can transmit PSFCHs on contiguous RB sets and cannot transmit PSFCHs on non-contiguous RB sets. After determining M to-be-sent PSFCHs, the terminal device determines N RB sets from RB sets on which the M PSFCHs are located. N is a positive integer, and when N is greater than 1, the N RB sets are contiguous RB sets. After determining the N RB sets, the terminal device sends PSFCHs on the N RB sets. The RB sets on which the M PSFCHs are located may be one or more RB sets, and the RB sets on which the M PSFCHs are located are a resource set including the one or more RB sets. A process of determining the N RB sets from the RB sets on which the M PSFCHs are located is a process of determining a subset of the resource set. The subset may include all RB sets in the resource set, or may include a part of RB sets in the resource set.

It should be noted that M is a quantity of the PSFCHs, and a quantity of the RB sets on which the M PSFCHs are located may be equal to M or may be less than M.

"After determining that there are M to-be-sent PSFCHs, the terminal device determines the N RB sets from the RB sets on which the M to-be-sent PSFCHs are located." may be replaced with: "The terminal device receives M PSSCHs, has M PSFCHs to be sent on a same PSFCH transmission occasion, and determines the N RB sets from the RB sets on which the M to-be-sent PSFCHs are located".

That the terminal device determines the N RB sets may also be understood as that the terminal device determines PSFCHs on the N RB sets. Then, the PSFCHs sent by the terminal device are the PSFCHs on the N RB sets determined by the terminal device. That is, determining the RB sets is not a mandatory step, and an objective of determining the RB sets is to determine to-be-sent PSFCHs on the RB sets. The terminal device may directly determine L PSFCHs in the M PSFCHs. The "determining the N RB sets from the RB sets on which the M to-be-sent PSFCHs are located" may also be replaced with "determining, by the terminal device, L PSFCHs from the M to-be-sent PSFCHs, where the L PSFCHs are located on the N RB sets". In this way, the terminal device may directly determine, from the to-be-sent PSFCHs, PSFCHs that need to be finally actually sent.

In the foregoing implementation, the terminal device may find, based on a capability for transmitting PSFCHs on contiguous frequency domain resources and/or non-contiguous frequency domain resources, one RB set or a plurality of contiguous RB sets from the RB sets on which the M PSFCHs are located to send PSFCHs. The finally sent PSFCHs satisfy the capability of the terminal device for transmitting PSFCHs on contiguous frequency domain resources and/or non-contiguous frequency domain resources, thereby ensuring that the terminal device can efficiently send the PSFCHs. The PSFCHs are sent on a subset of the RB sets on which the M to-be-sent PSFCHs are located, so that a quantity of sent PSFCHs can be increased as much as possible.

In a possible implementation, the N RB sets include an RB set on which a PSFCH with a smallest priority value in the M PSFCHs is located. In other words, the terminal device determines the L PSFCHs from the M PSFCHs based on priorities of the PSFCHs. Further, the terminal device preferentially sends a PSFCH with a small priority value in the M PSFCHs.

In the foregoing implementation, it is ensured that the PSFCHs sent by the terminal device always include the PSFCH with the smallest priority value in the M PSFCHs, and it is ensured that the terminal device can preferentially send a PSFCH with highest importance (that is, the PSFCH with the smallest priority value).

In a possible implementation, after determining the N RB sets, when sending the PSFCHs on the N RB sets, the terminal device may select P PSFCHs from the PSFCHs on the N RB sets, where the P PSFCHs are first P PSFCHs in the PSFCHs that are on the N RB sets and that are sorted in ascending order of priority values. P is not greater than a maximum PSFCH transmit quantity of the terminal device, and total power of the P PSFCHs is not greater than maximum PSFCH transmit power of the terminal device. In other words, the terminal device preferentially sends a PSFCH with a small priority value from the PSFCHs on the N RB sets. After determining the P PSFCHs, the terminal device sends the P PSFCHs. In this case, according to the foregoing descriptions, P=L.

In the foregoing implementation, after determining one RB set or a plurality of contiguous RB sets, the terminal device determines P PSFCHs from the RB set or the plurality of contiguous RB sets based on the priority values, and sends the P PSFCHs. Alternatively, the terminal device sends P PSFCHs from the RB set or the plurality of contiguous RB sets based on the priority values, and preferentially sends a PSFCH with a small priority value. Therefore, it is ensured that the terminal device can send P PSFCHs with high importance on the RB set or the plurality of contiguous RB sets. In this case, according to the foregoing descriptions, P=L.

In a possible implementation, after determining the N RB sets, when sending the PSFCHs on the N RB sets, the terminal device may perform LBT on the N RB sets, and determine a first resource group based on an RB set on which LBT is successfully performed in the N RB sets, where the first resource group includes one RB set or a plurality of contiguous RB sets; and the terminal device selects P PSFCHs from PSFCHs on the first resource group, where the P PSFCHs are first P PSFCHs in the PSFCHs that are on the first resource group and that are sorted in ascending order of priority values. P is not greater than a maximum PSFCH transmit quantity of the terminal device, and total power of the P PSFCHs is not greater than maximum PSFCH transmit power of the terminal device. In other words, the terminal device preferentially sends a PSFCH with a small priority value from the PSFCHs on the N RB sets. After determining the P PSFCHs, the terminal device sends the P PSFCHs.

In the foregoing implementation, after determining one RB set or a plurality of contiguous RB sets (that is, the first resource group) on which LBT is successfully performed, the terminal device determines P PSFCHs from the RB set or the plurality of contiguous RB sets based on the priority values, to ensure that the terminal device can send the P PSFCHs with high importance on the RB set or the plurality of contiguous RB sets.

In a possible implementation, when the terminal device sends the P PSFCHs, the terminal device may perform LBT on RB sets on which the P PSFCHs are located, determine a second resource group based on an RB set on which LBT is successfully performed in the RB sets on which the P PSFCHs are located, where the second resource group includes one RB set or a plurality of contiguous RB sets, and then send PSFCHs on the second resource group.

In the foregoing implementation, when sending the P PSFCHs, the terminal device sends PSFCHs on the RB set on which LBT is successfully performed, to ensure that the terminal device can successfully send the P PSFCHs with high importance, and also ensure that the PSFCHs finally sent by the terminal device are on contiguous RB sets.

In a possible implementation, when the terminal device determines the N RB sets from the RB sets on which the M PSFCHs are located, the terminal device selects Q PSFCHs from the M PSFCHs, where the Q PSFCHs are first Q PSFCHs in the M PSFCHs that are sorted in ascending order of priority values. Q is not greater than the maximum PSFCH transmit quantity of the terminal device, and total power of the Q PSFCHs is not greater than the maximum PSFCH transmit power of the terminal device. Then, the terminal device determines the N RB sets from RB sets on which the Q PSFCHs are located. That the terminal device determines the N RB sets from the RB sets on which the Q PSFCHs are located may also be replaced with: The terminal device determines L PSFCHs from the M to-be-sent PSFCHs, which may include that: the terminal device determines Q PSFCHs from the M PSFCHs, and determines LPSFCHs from the Q PSFCHs. The L PSFCHs are located on the N RB sets in the RB sets on which the Q PSFCHs are located.

In the foregoing implementation, the terminal device determines the Q PSFCHs from the M PSFCHs according to a principle of preferentially sending a PSFCH with a high priority. Therefore, the RB sets on which the Q PSFCHs are located are not necessarily contiguous. The determining the L PSFCHs from the Q PSFCHs considers a limitation that the terminal device sends PSFCHs only on contiguous RB sets. The L PSFCHs selected by the terminal device are on contiguous RB sets. Further, the N RB sets may include an RB set on which a PSFCH with a highest priority value is located. In this way, the N RB sets determined by the terminal device always include an RB set on which a PSFCH with high importance is located, to ensure that the terminal device can finally send the PSFCH with high importance.

In a possible implementation, when the terminal device determines the N RB sets from the RB sets on which the Q PSFCHs are located, the terminal device may perform LBT on the RB sets on which the Q PSFCHs are located, and then determine the N RB sets based on an RB set on which LBT is successfully performed in the RB sets on which the Q PSFCHs are located.

In the foregoing implementation, the N RB sets determined by the terminal device are RB sets on which LBT is successfully performed, to ensure that the PSFCHs can be successfully sent on the N RB sets subsequently.

In a possible implementation, when the terminal device sends the PSFCHs on the N RB sets, the terminal device may perform LBT on the N RB sets, and determine a third resource group based on an RB set on which LBT is successfully performed in the N RB sets, where the third resource group includes one RB set or a plurality of contiguous RB sets; and the terminal device sends PSFCHs on the third resource group.

In the foregoing implementation, the third resource group determined by the terminal device includes the RB set on which LBT is successfully performed in the N RB sets. Therefore, it is ensured that the PSFCHs can be successfully sent on the third resource group in the N RB sets subsequently, and it is also ensured that the finally sent PSFCHs are on contiguous RB sets.

In a possible implementation, the RB sets on which the M PSFCHs are located include a plurality of groups of RB sets, and each group of RB sets include one RB set or at least two contiguous RB sets. An RB set that independently forms a group means that the RB set is non-contiguous to an RB set in the RB sets on which the M PSFCHs are located other than the RB set. The N RB sets determined by the terminal device are a group of RB sets with a largest quantity of RB sets in the plurality of groups of RB sets.

In the foregoing implementation, the N RB sets determined by the terminal device can include a large quantity of RB sets, to ensure that the terminal device can send the PSFCHs on a large quantity of frequency domain resources.

In a possible implementation, the RB sets on which the M PSFCHs are located include a plurality of groups of RB sets, each group of RB sets include one RB set or at least two contiguous RB sets, the N RB sets are a group of RB sets with a largest quantity of PSFCHs in the plurality of groups of RB sets, and the RB set that forms an independent group is non-contiguous to an RB set in the RB sets on which the M PSFCHs are located other than the RB set.

In the foregoing implementation, the N RB sets determined by the terminal device have a large quantity of PSFCHs, to ensure that the terminal device can send a large quantity of PSFCHs.

In a possible implementation, the RB sets on which the M PSFCHs are located include a plurality of groups of RB sets, and each group of RB sets include one RB set or at least two contiguous RB sets. An RB set that independently forms a group means that the RB set is non-contiguous to an RB set in the RB sets on which the M PSFCHs are located other than the RB set. The N RB sets determined by the terminal device are a group of RB sets with a largest quantity of PSFCHs in the plurality of groups of RB sets.

In the foregoing implementation, the N RB sets determined by the terminal device can include an RB set with a largest quantity of PSFCHs, to ensure that the terminal device can increase a quantity of sent PSFCHs as much as possible.

In a possible implementation, the RB sets on which the M PSFCHs are located are RB sets on which LBT is successfully performed. It is ensured that the subsequently determined N RB sets are RB sets on which LBT is successfully performed, and it is ensured that the terminal device can successfully send the PSFCHs on the N RB sets.

According to a second aspect, a sidelink communication method is provided. The method may be applied to a terminal device, or may be applied to a module in a terminal device. The following uses an example on which the method is applied to a terminal device for description. In the method, a capability of the terminal device for transmitting PSFCHs on contiguous frequency domain resources and/or non-contiguous frequency domain resources is: The terminal device can transmit PSFCHs on non-contiguous RB sets and cannot transmit PSFCHs on contiguous RB sets. The terminal device determines M to-be-sent PSFCHs, and determines S RB sets from RB sets on which the M PSFCHs are located, where S is a positive integer, and when S is greater than 1, the S RB sets are non-contiguous RB sets; and after determining the S RB sets, the terminal device sends PSFCHs on the S RB sets. The RB sets on which the M PSFCHs are located may be one or more RB sets, and the RB sets on which the M PSFCHs are located are a resource set including the one or more RB sets. A process of determining the S RB sets from the RB sets on which the M PSFCHs are located is a process of determining a subset of the resource set. The subset may include all RB sets in the resource set, or may include a part of RB sets in the resource set.

M is a quantity of the PSFCHs, and a quantity of the RB sets on which the M PSFCHs are located may be equal to M or may be less than M.

In the foregoing implementation, the terminal device may find, based on a capability for transmitting PSFCHs on contiguous frequency domain resources and/or non-contiguous frequency domain resources, one RB set or a plurality of non-contiguous RB sets from the RB sets on which the M PSFCHs are located to send PSFCHs. The finally sent PSFCHs satisfy the capability of the terminal device for transmitting PSFCHs on contiguous frequency domain resources and/or non-contiguous frequency domain resources, thereby ensuring that the terminal device can efficiently send the PSFCHs.

In a possible implementation, the S RB sets include a first RB set, and the first RB set is an RB set on which a PSFCH with a smallest priority value in the M PSFCHs is located.

In the foregoing implementation, it is ensured that the PSFCHs sent by the terminal device always include the PSFCH with the smallest priority value in the M PSFCHs, and it is ensured that the terminal device can preferentially send a PSFCH with highest importance (that is, the PSFCH with the smallest priority value).

In a possible implementation, after determining the S RB sets, when sending the PSFCHs on the S RB sets, the terminal device selects P PSFCHs from the PSFCHs on the S RB sets, where the P PSFCHs are first P PSFCHs in the PSFCHs that are on the S RB sets and that are sorted in ascending order of priority values, P is not greater than a maximum PSFCH transmit quantity of the terminal device, and total power of the P PSFCHs is not greater than maximum PSFCH transmit power of the terminal device. After determining the P PSFCHs, the terminal device sends the P PSFCHs.

In the foregoing implementation, after determining one RB set or a plurality of non-contiguous RB sets, the terminal device determines P PSFCHs from the RB set or the plurality of non-contiguous RB sets based on the priority values, and sends the P PSFCHs. Therefore, it is ensured that the terminal device can send P PSFCHs with high importance on the RB set or the plurality of non-contiguous RB sets.

In a possible implementation, when the terminal device determines the S RB sets from the RB sets on which the M PSFCHs are located, the terminal device selects Q PSFCHs from the M PSFCHs, where the Q PSFCHs are first Q PSFCHs in the M PSFCHs that are sorted in ascending order of priority values, Q is not greater than a maximum PSFCH transmit quantity of the terminal device, and total power of the Q PSFCHs is not greater than maximum PSFCH transmit power of the terminal device. Then, the terminal device determines the S RB sets from the RB sets on which the Q PSFCHs are located.

In the foregoing implementation, the S RB sets determined by the terminal device always include an RB set on which a PSFCH with high importance is located, to ensure that the terminal device can finally send the PSFCH with high importance.

In a possible implementation, the S RB sets include a second RB set, and the second RB set is an RB set on which a PSFCH with a smallest priority value is located in an RB set non-contiguous to the first RB set. The S RB sets include a third RB set, and the third RB set is an RB set on which a PSFCH with a smallest priority value is located in an RB set non-contiguous to the first RB set and the second RB set. The rest is deduced by analogy.

In other words, the S RB sets include one or more non-contiguous RB sets other than the first RB set. The one or more RB sets are one or more non-contiguous RB sets on which first K PSFCHs in PSFCHs that are on an RB set in the S RB sets and non-contiguous to the first RB set and that are sorted in ascending order of priority values are located, where K is less than Q.

In the foregoing implementation, the S RB sets determined by the terminal device always include an RB set on which a PSFCH with high importance is located, to ensure that the terminal device can finally send the PSFCH with high importance.

In a possible implementation, the S RB sets include an RB set with a largest quantity of PSFCHs in the RB sets on which the M PSFCHs are located.

In the foregoing implementation, the S RB sets determined by the terminal device can include a large quantity of PSFCHs, to ensure that the terminal device can send a large quantity of PSFCHs.

In a possible implementation, the RB sets on which the M PSFCHs are located include a plurality of groups of RB sets, each group of RB sets include one RB set or at least two non-contiguous RB sets, and the S RB sets are a group of RB sets with a largest quantity of PSFCHs in the plurality of groups of RB sets.

In the foregoing implementation, the S RB sets determined by the terminal device can include a large quantity of RB sets, to ensure that the terminal device can send the PSFCHs on a large quantity of frequency domain resources.

According to a third aspect, a communication apparatus is provided. The communication apparatus may be the terminal device mentioned in any method in the first aspect and the second aspect. The communication apparatus may include a transceiver unit and a processing unit, to perform any one of the first aspect and the second aspect or any possible implementation of the first aspect and the second aspect. The transceiver unit is configured to perform functions related to sending and receiving. Optionally, a communication unit includes a receiving unit and a sending unit. In a design, the transceiver unit is a communication chip, the processing unit may be one or more processors or processor cores, and the transceiver unit may be an input/output circuit or a port of the communication chip.

In another design, the transceiver unit may be a transmitter and a receiver, or the communication unit may be a transmitter machine and a receiver machine.

Optionally, the communication apparatus further includes modules that may be configured to perform any one of the first aspect and the second aspect or any possible implementation of the first aspect and the second aspect.

According to a fourth aspect, a communication apparatus is provided. The communication apparatus may be the terminal device mentioned in any method in the first aspect and the second aspect. The communication apparatus may include a processor and a memory, to perform any one of the first aspect and the second aspect or any possible implementation of the first aspect and the second aspect. Optionally, the communication apparatus further includes a transceiver. The memory is configured to store a computer program or instructions. The processor is configured to invoke the computer program or the instructions from the memory and run the computer program or the instructions. When the processor executes the computer program or the instructions in the memory, the communication apparatus is caused to perform any one of the first aspect and the second aspect or any possible implementation of the first aspect and the second aspect.

Optionally, there are one or more processors, and there are one or more memories.

Optionally, the memory may be integrated with the processor, or the memory and the processor are disposed separately.

Optionally, the transceiver may include a transmitter machine (transmitter) and a receiver machine (receiver).

According to a fifth aspect, a communication apparatus is provided. The communication apparatus may be the terminal device mentioned in any method in the first aspect and the second aspect. The communication apparatus may include a processor, to perform any one of the first aspect and the second aspect or any possible implementation of the first aspect and the second aspect. The processor is coupled to a memory. Optionally, the communication apparatus further includes the memory. Optionally, the communication apparatus further includes a communication interface, and the processor is coupled to the communication interface.

In an implementation, when the communication apparatus is the terminal device mentioned in any method in the first aspect and the second aspect, the communication interface may be a transceiver or an input/output interface. Optionally, the transceiver may be a transceiver circuit. Optionally, the input/output interface may be an input/output circuit.

In another implementation, when the communication apparatus is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to a sixth aspect, a computer program product is provided. The computer program product includes a computer program (which may also be referred to as code or instructions). When the computer program is run, a computer is caused to perform any one of the first aspect and the second aspect or any possible implementation of the first aspect and the second aspect.

According to a seventh aspect, a computer-readable storage medium is provided. The computer-readable storage medium stores a computer program (which may also be referred to as code or instructions). When the computer program is run on a computer, the computer is caused to perform any one of the first aspect and the second aspect or any possible implementation of the first aspect and the second aspect.

According to an eighth aspect, a chip system is provided. The chip system may include a processor. The processor is coupled to a memory, and may be configured to perform any one of the first aspect and the second aspect or any possible implementation of the first aspect and the second aspect. Optionally, the chip system further includes the memory. The memory is configured to store a computer program (which may also be referred to as code or instructions). The processor is configured to invoke the computer program from the memory and run the computer program, to cause a device on which the chip system is installed to perform any one of the first aspect and the second aspect or any possible implementation of the first aspect and the second aspect.

According to a ninth aspect, a processing apparatus is provided, including an interface circuit and a processing circuit. The interface circuit may include an input circuit and an output circuit. The processing circuit is configured to: receive a signal through the input circuit, and transmit a signal through the output circuit, so that any one of the first aspect and the second aspect or any possible implementation of the first aspect and the second aspect is implemented.

In a specific implementation process, the processing apparatus may be a chip, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

In an implementation, when the communication apparatus is the terminal device mentioned in any method in the first aspect and the second aspect, the interface circuit may be a radio frequency processing chip in the terminal device, and the processing circuit may be a baseband processing chip in the terminal device.

In another implementation, the communication apparatus may be some components in the terminal device, for example, an integrated circuit product like a system chip or a communication chip. The interface circuit may be an input/output interface, an interface circuit, an output circuit, an input circuit, a pin, a related circuit, or the like on a chip or a chip system. The processing circuit may be a logic circuit on the chip.

### BRIEF DESCRIPTION OF DRAWINGS

FIG. 1 is a diagram of an architecture of a communication system according to an embodiment of this application;
FIG. 2 is a diagram of an architecture of another communication system according to this application;
FIG. 3 is a diagram of a sidelink communication method according to an embodiment of this application;
FIG. 4A is a diagram of a sidelink communication method according to an embodiment of this application;
FIG. 4B is a diagram of three types of distribution of PSFCHs according to an embodiment of this application;
FIG. 4C is a diagram of distribution of P PSFCHs according to an embodiment of this application;
FIG. 5A is a diagram of a sidelink communication method according to an embodiment of this application;
FIG. 5B is a diagram of distribution of Q PSFCHs according to an embodiment of this application;
FIG. 5C to FIG. 5E are diagrams of distribution of N RB sets according to embodiments of this application;
FIG. 6A is a diagram of a sidelink communication method according to an embodiment of this application;
FIG. 6B is a diagram of distribution of a plurality of groups of RB sets according to an embodiment of this application;
FIG. 6C is a diagram of distribution of N RB sets according to embodiments of this application;
FIG. 7A is a diagram of a sidelink communication method according to an embodiment of this application;
FIG. 7B is a diagram of distribution of a plurality of groups of RB sets according to an embodiment of this application;
FIG. 7C and FIG. 7D are diagrams of distribution of N RB sets according to embodiments of this application;
FIG. 8 is a diagram of a sidelink communication method according to an embodiment of this application;
FIG. 9A is a diagram of a sidelink communication method according to an embodiment of this application;
FIG. 9B and FIG. 9C are diagrams of distribution of S RB sets according to embodiments of this application;
FIG. 10A is a diagram of a sidelink communication method according to an embodiment of this application;
FIG. 10B and FIG. 10C are diagrams of distribution of Q PSFCHs according to embodiments of this application;
FIG. 10D and FIG. 10E are diagrams of distribution of S RB sets according to embodiments of this application;
FIG. 11A is a diagram of a sidelink communication method according to an embodiment of this application;
FIG. 11B is a diagram of distribution of S RB sets according to an embodiment of this application;
FIG. 12A is a diagram of a sidelink communication method according to an embodiment of this application;
FIG. 12B is a diagram of distribution of a plurality of groups of RB sets according to an embodiment of this application;
FIG. 13 is a diagram of a structure of a communication apparatus according to an embodiment of this application; and
FIG. 14 is a diagram of a structure of a communication apparatus according to an embodiment of this application.

### DESCRIPTION OF EMBODIMENTS

Before a sidelink communication method provided in embodiments of this application is described, some concepts designed in embodiments of this application are first clarified.
(1) Terminal device: In embodiments of this application, the terminal device may be a complete terminal device, or may be a module configured to implement a function of the terminal device, for example, a chip system. The chip system may be disposed in the terminal device. The terminal device includes a device that provides data connectivity for a user. For example, the terminal device may include a handheld device with a wireless connection function or a processing device connected to a wireless modem. The terminal device may communicate with a core network through a radio access network (radio access network, RAN), and exchange data with the RAN or exchange voice and data with the core network. The terminal device may include a user equipment (user equipment, UE), a wireless terminal device, a mobile terminal device, a device-to-device (device-to-device, D2D) communication terminal device, a vehicle-to-everything (vehicle-to-everything, V2X) communication terminal device, an intelligent vehicle, an in-vehicle infotainment system (or referred to as an internet of vehicles system) (telematics box, TBOX), a machine-to-machine/machine-type communication (machine-to-machine/machine-type communication, M2M/MTC) terminal device, and an internet of things (internet of things, IoT) terminal device. Most typically, the terminal device may be a carrier like a vehicle, a ship, or an aircraft, a terminal-type road side unit, or a communication module or a chip built in the vehicle or the road side unit. A network device in a V2X technology is a road side unit (road side unit, RSU). The RSU may be a fixed infrastructure entity supporting a V2X application, and may exchange, through a PC5 air interface, a message with another entity supporting the V2X application. In addition, the terminal device may further include a communication apparatus in a future communication system like metaverse.

In embodiments of this application, communication between terminal devices through a PC5 interface is supported. In other words, transmission on a sidelink is supported. A transmission link in the PC5 interface is defined as a sidelink. Enabling SL communication on an unlicensed frequency band in local space is an important evolution direction, and corresponding protocol technologies may be collectively referred to as a sidelink-unlicensed (sidelink-unlicensed, SL-U) technology.

By way of example, and not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent device include full-featured and large-sized devices that can implement all or a part of functions without depending on smartphones, for example, smart watches or smart glasses, and include devices that dedicated to only one type of application function and need to collaboratively work with other devices such as smartphones, for example, various smart bands, smart helmets, or smart jewelry for monitoring physical signs.

If the various terminal devices described above are in a vehicle, for example, placed in the vehicle or mounted in the vehicle, the terminal devices may all be considered as vehicle-mounted terminal devices. For example, the vehicle-mounted terminal devices are also referred to as on-board units (on-board units, OBUs).

In embodiments of this application, the terminal device may further include a relay (relay), and a road side unit (road side unit, RSU) may be further considered as a terminal device.

In the fourth generation (fourth generation, 4G) mobile communication technology standard, the fifth generation (fifth generation, 5G) mobile communication technology standard, and the new radio (new radio, NR) standard, the terminal device includes a physical (physical) layer, a medium access control (medium access control, MAC) layer, a radio link control (radio link control, RLC) layer, a packet data convergence protocol (packet data convergence protocol, PDCP) layer, and the like from bottom to top. In embodiments of this application, all layers above the physical layer may be referred to as higher layers.

In embodiments of this application, the physical layer may be configured to perform busy rate measurement on a resource (for example, a target resource mentioned in embodiments of this application). A higher layer above the physical layer (for example, the MAC layer) may perform parsing of a result of the busy rate measurement and determine whether to cancel a consistent LBT failure state of the resource. The higher layer or the physical layer may further exclude, during resource selection, a resource in the consistent LBT failure state.

(2) Network device: The network device is an access device through which a terminal device accesses a mobile communication system in a wireless manner, and includes a radio access network (radio access network, RAN) device, for example, a base station. The network device may alternatively be a device that communicates with the terminal device through an air interface. The network device may include an evolved NodeB (evolved NodeB), which may be briefly referred to as an eNB or an e-NodeB, in an LTE system or a long term evolution-advanced (long term evolution-advanced, LTE-A) system. The eNB is an apparatus that is deployed in a radio access network and that satisfies the fourth generation (fourth generation, 4G) mobile communication technology standard and that provides a wireless communication function for the terminal device. The network device may alternatively be a new radio controller (new radio controller, NR controller), a gNodeB (gNodeB, gNB) in a 5G system, a central network element (central unit), a new radio base station, a remote radio unit, a micro base station (also referred to as a small cell), a relay (relay), a distributed network element (distributed unit), macro base stations in various forms, a transmission reception point (transmission reception point, TRP), a transmission measurement function (transmission measurement function, TMF), a transmission point (transmission point, TP), or any other radio access device. Embodiments of this application are not limited thereto. The network device may alternatively include a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a remote radio unit (remote radio unit, RRU), a wireless fidelity (wireless fidelity, Wi-Fi) access point (access point, AP), a baseband pool (BBU pool) and an RRU in a cloud radio access network (cloud radio access network, CRAN), or the like. A specific technology and a specific device form that are used by the network device are not limited in embodiments of this application. For example, the network device may correspond to an eNB in a 4G system, and correspond to a gNB in a 5G system.

In addition, the base station in embodiments of this application may include a central unit (central unit, CU) and a distributed unit (distributed unit, DU), and a plurality of DUs may be centrally controlled by one CU. The CU and the DU may be divided based on a protocol layer function that the CU and the DU each have in a wireless network. For example, functions of a packet data convergence protocol (packet data convergence protocol, PDCP) layer and a protocol layer above the packet data convergence protocol layer are set on the CU, and functions of protocol layers below the PDCP layer, for example, a radio link control (radio link control, RLC) layer and a medium access control (medium access control, MAC) layer, are set on the DU. It should be noted that such protocol layer division is merely an example, and division may alternatively be performed at another protocol layer. A radio frequency apparatus may be remotely deployed and not disposed in the DU, or may be integrated into the DU, or may be partially remotely disposed and partially integrated into the DU. This is not limited in embodiments of this application. In addition, in some embodiments, a control plane (control plan, CP) and a user plane (user plan, UP) of the CU may be further separated into different entities for implementation, where the entities are respectively a control-plane CU entity (CU-CP entity) and a user-plane CU entity (CU-UP entity). In this network architecture, signaling generated by the CU may be sent to the terminal device via the DU, or signaling generated by the UE may be sent to the CU via the DU. The DU may transparently transmit the signaling to the terminal device or the CU by directly encapsulating the signaling at a protocol layer without parsing the signaling. In this network architecture, the CU is classified as a network device on a RAN side. In addition, the CU may alternatively be classified as a network device on a core network (core network, CN) side. This is not limited in this application.

In different systems, the CU (including the CU-CP and the CU-UP) or the DU may also have different names, but a person skilled in the art may understand meanings thereof. For example, in an open radio access network (open radio access network, O-RAN) system, the CU may also be referred to as an O-CU (open CU), the DU may also be referred to as an O-DU, the CU-CP may also be referred to as an O-CU-CP, and the CU-UP may also be referred to as an O-CU-UP. For ease of description, the CU, the CU-CP, the CU-UP, and the DU are used as examples for description in this application.

In embodiments of this application, an apparatus configured to implement a function of the network device may be a network device, or may be an apparatus, for example, a chip system, that can support the network device in implementing the function. The apparatus may be mounted in the network device. In technical solutions provided in embodiments of this application, an example in which the apparatus configured to implement the function of the network device is a network device is used for describing the technical solutions provided in embodiments of this application.

(3) Sidelink communication: In this application, the sidelink communication is communication performed between terminal devices through a sidelink.

The following describes the sidelink communication by using V2X communication as an example.

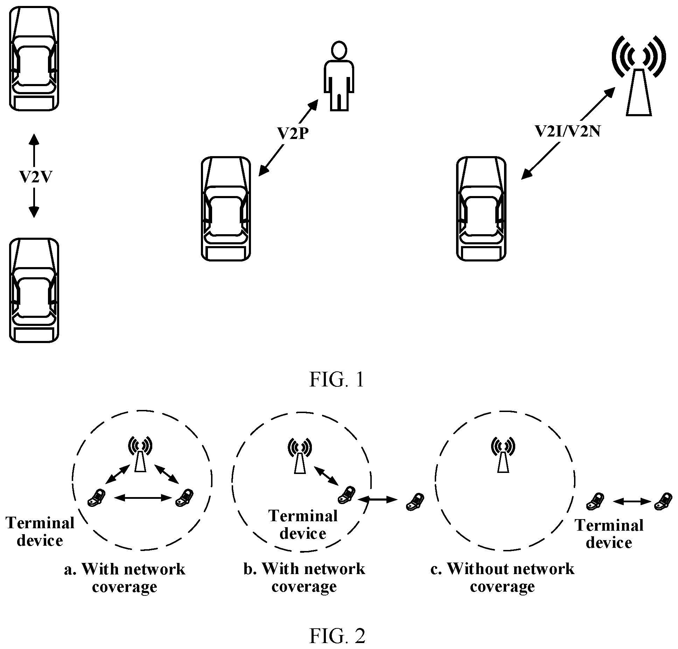

The V2X communication is intended for a high-speed device represented by a vehicle, and is a basic technology and a key technology that are to be used in a future scenario that has an extremely high communication delay requirement. Application fields of the V2X communication include an intelligent vehicle, autonomous driving, an intelligent transportation system, and the like. As shown in FIG. 1, a typical V2X communication scenario includes vehicle-to-vehicle (vehicle-to-vehicle, V2V) communication, vehicle-to-pedestrian (vehicle-to-pedestrian, V2P) communication, vehicle-to-infrastructure (vehicle-to-infrastructure, V2I) communication, or vehicle-to-network (vehicle-to-network, V2N) communication. For the V2V communication, the terminal device may be a vehicle, a vehicle-mounted terminal device located in a vehicle, or the like. For example, for the V2P communication, the terminal device may be a vehicle, a vehicle-mounted terminal device located in a vehicle, or the like, or may be a terminal device carried by a pedestrian, for example, a mobile terminal or a wearable device. For the V2I communication, the terminal device may be a vehicle, a vehicle-mounted terminal device located in a vehicle, or the like, or may be an infrastructure like an RSU.

Based on the V2X communication, the terminal device may send, as sidelink data, status information such as a location and a speed of the terminal device, driving intention information such as turning, paralleling, or reversing, or information triggered by a periodic event or an aperiodic event to a surrounding terminal device. Similarly, the terminal device may also receive sidelink data from another surrounding terminal device. In addition, the terminal device may further forward sidelink data received by the terminal device from another terminal device. For example, the sidelink data and/or sidelink feedback information are/is carried on a PSSCH.

The V2X communication may support a communication scenario with network coverage and a communication scenario without network coverage. In scenarios in which the terminal device has network coverage shown by numbers a and b in FIG. 2, a resource allocation manner used when the terminal device performs sending through the V2X communication may be a network device scheduling mode. For example, a resource that is scheduled and sent by a network device and that is used by the terminal device to perform sidelink communication may be referred to as a licensed resource or a licensed frequency band. In a scenario in which the terminal device has no network coverage shown by a number c in FIG. 2, or in a case in which the terminal device has network coverage but does not use a network device scheduling mode, the terminal device may select a resource, that is, select, from a resource pool, a resource used for sidelink communication, where the resource may be referred to as an unlicensed resource or an unlicensed frequency band.

In a network coverage area, the terminal device may obtain SL resource pool (resource pool) configuration information and/or SL bandwidth part (bandwidth part, BWP) configuration information by receiving a system information block (system information block, SIB) or terminal device user-specific (UE-specific) radio resource control (radio resource control, RRC) signaling of the network device. Alternatively, the terminal apparatus may use pre-configured SL resource pool configuration information or SL BWP configuration information. For example, when there is no network coverage area, the terminal device may use the pre-configured SL resource pool configuration information or SL BWP configuration information. The SL resource pool configuration information includes resource pool resource information, and the resource pool resource information indicates an SL resource pool. A resource pool is a set of time-frequency resources for sidelink communication between UEs. The resource pool may include a code domain resource. A resource in the resource pool includes a resource used by the terminal device to send and receive at least one of the following physical channels, for example, a sidelink control channel (physical sidelink control channel, PSCCH), a physical sidelink shared channel (physical sidelink shared channel, PSSCH), a sidelink discovery channel (physical sidelink discovery channel, PSDCH), and a sidelink feedback channel (physical sidelink feedback channel, PSFCH). A type of a service carried on the PSSCH may include a unicast communication type, a multicast communication type, and/or a broadcast communication type.

In time domain, the SL resource pool includes one or more time units. The time unit may be one or more symbols, one or more slots (slots), one or more mini-slots (mini-slots), one or more subframes, one or more frames, or the like. The one or more time units may be contiguous or discrete in time. It should be understood that time domain units in one resource pool are logically contiguous.

In frequency domain, the SL resource pool includes one or more frequency domain units. The frequency domain unit may be one resource element (resource element, RE), several REs, one resource block (resource block, RB), several RBs, one sub-channel (sub-channel), or several sub-channels. A size of a sub-channel indicates a quantity of one or more contiguous (continuous) RBs included in one sub-channel in frequency domain, and the quantity may be an integer like 10, 12, 15, 20, 25, or 50.

The 3GPP defines the PSSCH and the PSFCH for end-to-end sidelink communication. The PSFCH is used to carry hybrid automatic repeat request (hybrid automatic repeat request, HARQ) information. If HARQ feedback (feedback) is enabled, after a terminal device that sends data (referred to as a data sending terminal for short) sends, through a PSSCH, sidelink data to a terminal device that receives data (referred to as a data receiving terminal for short), the data receiving terminal may send the HARQ information to the data sending terminal based on a receiving status of the sidelink data, where the HARQ information includes acknowledgment (acknowledgment, ACK) information or negative acknowledgment (negative acknowledgment, NACK) information. After receiving the HARQ information, the data sending terminal may perform retransmission based on the HARQ information. When receiving the ACK information, the data sending terminal does not perform retransmission. When receiving the NACK information, the data sending terminal performs retransmission, so as to improve a success rate of sending the sidelink data, thereby improving reliability of sidelink communication.

For the terminal device, each time the terminal device receives a PSSCH, a cast type of the PSSCH is unicast or multicast, HARQ of the PSSCH is enabled, and the terminal device needs to send a corresponding PSFCH on a corresponding frequency domain resource. A frequency domain resource on which the PSFCH is located is determined based on a frequency domain resource on which a corresponding PSSCH is located. A time domain resource on which the PSFCH is located is determined based on a time domain resource on which the corresponding PSSCH is located. If the terminal device receives the PSSCH in a slot n, the terminal device sends the corresponding PSFCH in a slot n+k and a 1^{st} slot that includes a PSFCH resource and that is after the slot n+k, where k is a minimum value, and is configured or pre-configured by the network device.

A time domain resource of the PSFCH is configured at a fixed time domain position in the SL resource pool. For example, the time domain resource of the PSFCH may be periodically configured or pre-configured in the SL resource pool. In the SL resource pool, the time domain resource of the PSFCH may be uniquely determined based on a time domain resource of each PSSCH according to a predefined rule. This operating mode is applicable to a licensed frequency band, an intelligent transportation system (intelligent transportation system, ITS) frequency band, or an unlicensed frequency band.

On the unlicensed frequency band, the terminal device needs to perform a listen before talk (listen before talk, LBT) process, and then uses a spectrum resource. If the LBT succeeds, it means that a channel is idle, that is, a resource in a current spectrum is not used by another device or is not interfered with by transmission of another device, and the terminal device may access the channel and use the spectrum resource. If the LBT fails, it means that a channel is busy, that is, a resource in a current spectrum is used by another device, and the terminal device cannot access the channel and cannot use the spectrum resource. In addition, there are some reasons why feedback cannot be performed. For example, the terminal device cannot send feedback information on a current feedback occasion due to a priority, power, or a device capability limitation. One time of PSSCH transmission may correspond to a plurality of PSFCH transmission occasions. When the terminal device fails to send a PSFCH on a PSFCH transmission occasion, the terminal device may send the PSFCH on a next PSSCH transmission occasion.

Currently, when the terminal device has M to-be-sent PSFCHs, the terminal device needs to select one or more PSFCHs in ascending order of priority values of the M PSFCHs, and then send the selected one or more PSFCHs. A total quantity of the selected one or more PSFCHs is not greater than a maximum PSFCH transmit quantity of the terminal device, and total power of the selected one or more PSFCHs is not greater than maximum PSFCH transmit power of the terminal device. The maximum PSFCH transmit quantity of the terminal device is a capability reported by the terminal device. The maximum PSFCH transmit power of the terminal device is P_{c,max}. P_{c,max} is preset.

A smaller priority value of a PSFCH indicates a higher priority of the PSFCH. For example, a value range of the priority value is 1, 2, 3, 4, 5, 6, 7, and 8. This application does not depend on a correspondence between priorities and priority values. In this application, a PSFCH with a small priority value is sent, that is, a PSFCH with a high priority is sent. When a larger priority value of a PSFCH indicates a higher priority of the PSFCH, sending of a PSFCH with a small priority value in this application may be replaced with sending of a PSFCH with a large priority value.

This PSFCH sending manner does not consider a capability of the terminal device for transmitting PSFCHs on contiguous frequency domain resources and/or non-contiguous frequency domain resources. In 3GPP, for end-to-end sidelink communication, the terminal device is allowed to have different capabilities for transmitting PSFCHs on contiguous frequency domain resources and/or non-contiguous frequency domain resources. Specifically, the capability of the terminal device for transmitting PSFCHs includes:
Capability 1: The terminal device can transmit PSFCHs on contiguous frequency domain resource units.
Capability 2: The terminal device can transmit PSFCHs on non-contiguous frequency domain resource units.

The "contiguous frequency domain resource units" refer to at least two frequency domain resource units connected in frequency domain. The "non-contiguous frequency domain resource units" refer to at least two frequency domain resource units disconnected in frequency domain. The terminal device transmits PSFCHs only on one frequency domain resource unit. This manner of transmitting PSFCHs may be considered as a "special" case when the PSFCHs are transmitted on non-contiguous frequency domain resource units or when the PSFCHs are transmitted on contiguous frequency domain resource units.

The frequency domain resource unit is a resource unit obtained through division in frequency domain. A specific type of the frequency domain resource unit is not limited in embodiments of this application. The frequency domain resource unit may be a resource block set (RB set), or may be a carrier or a subcarrier.

Based on the capability reported by the terminal device, the capability of the terminal device for transmitting PSFCHs on contiguous frequency domain resources and/or non-contiguous frequency domain resources includes:
Case 1: The terminal device can transmit PSFCHs on contiguous frequency domain resource units, and cannot transmit PSFCHs on non-contiguous frequency domain resource units.
Case 2: The terminal device can transmit PSFCHs on non-contiguous frequency domain resource units, and cannot transmit PSFCHs on contiguous frequency domain resource units.
Case 3: The terminal device can transmit PSFCHs on non-contiguous frequency domain resource units, and can transmit PSFCHs on contiguous frequency domain resource units.
Case 4: The terminal device cannot transmit PSFCHs on non-contiguous frequency domain resource units, and cannot transmit PSFCHs on contiguous frequency domain resource units.

The foregoing Case 2 and Case 4 are only two possible cases. Existence of the two cases is not necessarily limited in embodiments of this application.

In Case 1, when sending PSFCHs, the terminal device can send only PSFCHs on contiguous frequency domain resource units, and cannot send PSFCHs on non-contiguous frequency domain resource units. In other words, in Case 1, the PSFCHs sent by the terminal device can be distributed only on contiguous frequency domain resource units.

Similarly, in Case 2, when sending PSFCHs, the terminal device can send only PSFCHs on non-contiguous frequency domain resource units, and cannot send PSFCHs on contiguous frequency domain resource units. In other words, in Case 2, the PSFCHs sent by the terminal device can be distributed only on non-contiguous frequency domain resource units.

In embodiments of this application, a sidelink communication method is separately provided for the terminal device in Case 1 and Case 2. In the sidelink communication method, the terminal device may select finally sent PSFCHs from the M to-be-sent PSFCHs based on the capability for transmitting PSFCHs on contiguous frequency domain resources and/or non-contiguous frequency domain resources. Manners in which the terminal device selects the finally sent PSFCHs from the M to-be-sent PSFCHs in Case 3 and Case 4 are not limited in this application.

The following separately describes the two sidelink communication methods provided in embodiments of this application by using an example in which the frequency domain resource unit is an RB set. It should be noted that the sidelink communication method provided in embodiments of this application is also applicable to a scenario of another type of frequency domain resource unit. An execution process of the sidelink communication method is similar to an execution process of the sidelink communication method when the frequency domain resource unit is an RB set. A difference lies only in a specific type of the frequency domain resource unit. The sidelink communication method in the scenario of the another type of frequency domain resource unit is not described herein. For details, refer to embodiments of this application.
**(1)** **Case 1:** The terminal device can transmit PSFCHs on contiguous RB sets, and cannot transmit PSFCHs on non-contiguous RB sets.

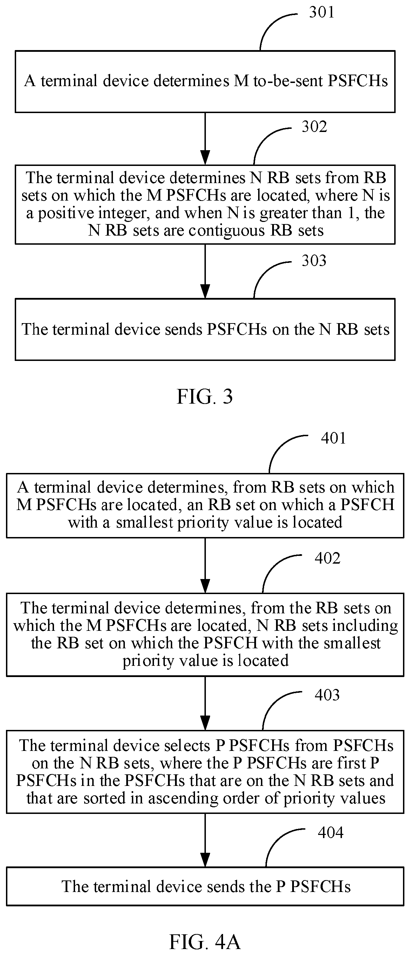

FIG. 3 shows a sidelink communication method according to an embodiment of this application. The method includes the following steps.

**Step 301: A terminal device determines M to-be-sent PSFCHs.**

It can be learned from the foregoing descriptions of sidelink communication that each time the terminal device receives a PSSCH, if the PSSCH is transmitted in a unicast manner or transmitted in a multicast manner, HARQ of the PSSCH is enabled, and the terminal device needs to feed back a PSFCH, to feed back HARQ information to a terminal device that sends the PSSCH. Each time the terminal device sends a PSSCH, the terminal device receives a corresponding PSFCH, to obtain HARQ information fed back by a terminal device that receives the PSSCH.

Based on this, there may be the following two cases in which the terminal device determines the M to-be-sent PSFCHs:

In a first case, the terminal device has M to-be-sent PSFCHs and F to-be-received PSFCHs.

In this case, if the terminal device supports full-duplex communication, the terminal device can perform sending and receiving simultaneously. The terminal device determines that the M PSFCHs need to be sent and the F PSFCHs need to be received simultaneously.

If the terminal device supports half-duplex communication, the terminal device cannot perform sending and receiving simultaneously, and needs to choose to perform sending or receiving. In this case, the terminal device needs to determine to send the M PSFCHs or receive the F PSFCHs. For example, the terminal device determines, based on priority values of the M to-be-sent PSFCHs and priority values of the F to-be-received PSFCHs, a PSFCH with a smallest priority value in the M PSFCHs and the F PSFCHs. When the PSFCH with the smallest priority value is a to-be-sent PSFCH, the terminal device determines that the M PSFCHs need to be sent. When the PSFCH with the smallest priority value is a to-be-received PSFCH, the terminal device needs to receive the F PSFCHs.

In a second case, the terminal device has M to-be-sent PSFCHs, and has no to-be-received PSFCH.

In this case, the terminal device determines that the M PSFCHs need to be sent.

**Step 302: The terminal device determines N RB sets from RB sets on which the M PSFCHs are located, where N is a positive integer, and when N is greater than 1, the N RB sets are contiguous RB sets.**

Step 302 may be understood as that the terminal device determines L PSFCHs from the M to-be-sent PSFCHs. The L PSFCHs are located on the N RB sets. N is a positive integer, and when N is greater than 1, the N RB sets are contiguous RB sets.

**Step 303: The terminal device sends PSFCHs on the N RB sets.**

The M PSFCHs that need to be sent and that are determined by the terminal device are the M to-be-sent PSFCHs. However, due to impact of a capability of the terminal device for transmitting PSFCHs on contiguous frequency domain resources and/or non-contiguous frequency domain resources (optionally, the terminal device may be further limited by a maximum PSFCH transmit quantity of the terminal device and/or maximum PSFCH transmit power of the terminal device), the PSFCHs finally sent by the terminal device may be the M PSFCHs, or may be a part of the M PSFCHs. To determine the finally sent PSFCHs, the terminal device performs step 302 and step 303.

The M PSFCHs may be distributed on a same RB set, or may be distributed on a plurality of RB sets. The terminal device first determines the N RB sets through step 302. Because the terminal device can send PSFCHs only on contiguous RB sets, the N RB sets determined by the terminal device are one RB set or a plurality of contiguous RB sets.

After determining the N RB sets, the terminal device sends the PSFCHs on the N RB sets. The terminal device may send all of the to-be-sent PSFCHs on the N RB sets, or may send a part of the to-be-sent PSFCHs on the N RB sets.

In the embodiment shown in FIG. 3, to clarify a process in which the terminal device sends the PSFCHs, sending of the PSFCHs by the terminal device is divided into two steps. In a first step, the N RB sets are first determined, and in a second step, the PSFCHs are sent on the N RB sets. Actually, when sending the PSFCHs, the terminal device may determine, from the RB sets on which the M PSFCHs are located, L PSFCHs on one RB set or a plurality of contiguous RB sets (that is, the N RB sets), and then send the determined PSFCHs. Therefore, in this embodiment of this application, the step of determining the N RB sets may be understood as determining the L PSFCHs from the M PSFCHs.

An execution occasion of the embodiment shown in FIG. 3 is not limited in this embodiment of this application.

For example, after performing LBT, the terminal device may perform the embodiment shown in FIG. 3 for an RB set on which LBT is successfully performed. In this case, the RB set on which LBT is successfully performed is the RB sets on which the M PSFCHs are located. To be specific, the terminal device determines to-be-sent PSFCHs, and PSFCHs on the RB set on which LBT is successfully performed in RB sets on which the to-be-sent PSFCHs are located are the M to-be-sent PSFCHs.

For another example, when performing the embodiment shown in FIG. 3, after determining the N RB sets, the terminal device performs LBT on the determined N RB sets, and then sends PSFCHs on an RB set on which LBT is successfully performed in the N RB sets. However, in this manner, there is a case in which the RB set on which LBT is successfully performed in the N RB sets is not contiguous RB sets. The terminal device may determine one RB set or contiguous RB sets from the RB set on which LBT is successfully performed in the N RB sets, and send the PSFCHs on the determined RB set or the determined contiguous RB sets. In this embodiment of this application, a manner in which the terminal device determines one RB set or contiguous RB sets from the RB set on which LBT is successfully performed in the N RB sets and a manner in which the terminal device sends the PSFCHs on the RB set or the contiguous RB sets are not limited.

According to the sidelink communication method shown in FIG. 3, the N RB sets determined by the terminal device are one RB set or a plurality of contiguous RB sets, which satisfies the capability of the terminal device for transmitting PSFCHs on contiguous frequency domain resources and/or non-contiguous frequency domain resources, thereby ensuring that the terminal device efficiently transmits the PSFCHs.

In this embodiment of this application, the terminal device may implement the sidelink communication method shown in FIG. 3 in any one of the following manners. The manners described below are execution manners of step 302 and step 303 in the sidelink communication method shown in FIG. 3.

**Manner 1.** FIG. 4A shows a sidelink communication method according to an embodiment of this application. The method includes the following steps.

**Step 401: A terminal device determines, from RB sets on which M PSFCHs are located, an RB set on which a PSFCH with a smallest priority value is located.**

In other words, the terminal device determines the PSFCH with the smallest priority value from the M PSFCHs.

**Step 402: The terminal device determines, from the RB sets on which the M PSFCHs are located, N RB sets including the RB set on which the PSFCH with the smallest priority value is located.**

In other words, the terminal device determines, from the M PSFCHs, the N RB sets including the PSFCH with the smallest priority value.

Optionally, step 401 and step 402 herein may be combined into one step, that is, the terminal device performs only step 402, and does not perform step 401. This is not limited herein.

After determining the RB set on which the PSFCH with the smallest priority value is located, the terminal device determines whether the RB sets on which the M PSFCHs are located include an RB set contiguous to the RB set on which the PSFCH with the smallest priority value is located.

If the RB sets on which the M PSFCHs are located do not include an RB set contiguous to the RB set on which the PSFCH with the smallest priority value is located, N is equal to 1, and the RB set determined by the terminal device is the RB set on which the PSFCH with the smallest priority value is located.

If the RB sets on which the M PSFCHs are located include an RB set contiguous to the RB set on which the PSFCH with the smallest priority value is located, N is greater than 1, the terminal device determines N contiguous RB sets, and the N RB sets include the RB set on which the PSFCH with the smallest priority value is located and the RB set contiguous to the RB set on which the PSFCH with the smallest priority value is located. If the RB sets on which the M PSFCHs are located include an RB set that is contiguous to the RB set contiguous to the RB set on which the PSFCH with the smallest priority value is located, the N RB sets further include the RB set that is contiguous to the RB set contiguous to the RB set on which the PSFCH with the smallest priority value is located. In other words, the N RB sets are N connected RB sets, and include the RB set on which the PSFCH with the smallest priority value is located.

For ease of description, the RB set on which the PSFCH with the smallest priority value is located is marked as an RB set-A, an RB set contiguous to the RB set-A is marked as an RB set-B1, an RB set contiguous to the RB set-B1 is marked as an RB set-C1, and the rest is deduced by analogy.

When the RB sets on which the M PSFCHs are located include the RB set-B1 contiguous to the RB set-A, the N contiguous RB sets determined by the terminal device include the RB set-A and the RB set-B1. If the RB sets on which the M PSFCHs are located further include the RB set-C1 contiguous to the RB set-B1, the N RB sets further include the RB set-C1. The finally determined N RB sets need to satisfy the following condition: An RB set in the RB sets on which the M PSFCHs are located other than the N RB sets is non-contiguous to any RB set in the N RB sets. There may be more than one RB set-B1. There may also be more than one RB set-C1.

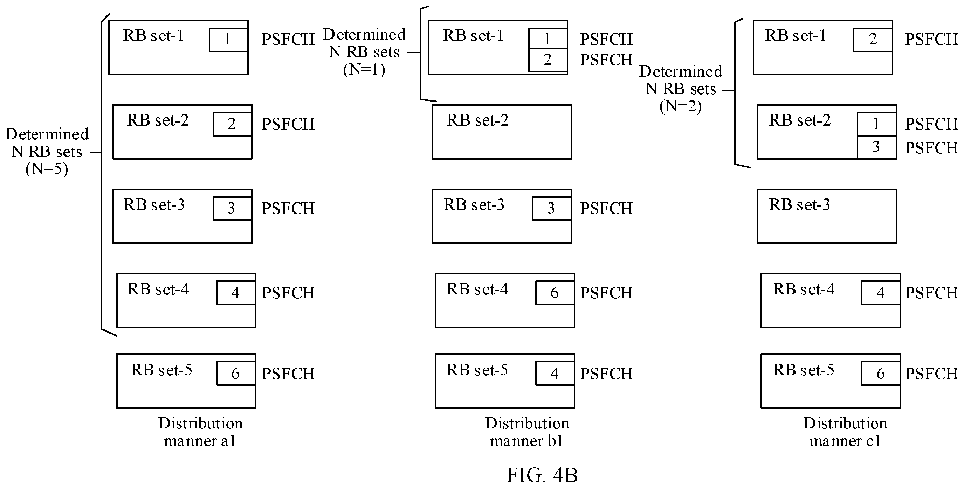

The following describes a manner in which the terminal device determines the N RB sets with reference to a specific example. FIG. 4B is a diagram of distribution of M PSFCHs according to an embodiment of this application. In FIG. 4B, M is 5, and three types of possible distribution of the M PSFCHs are shown as an example. In FIG. 4B, the three distribution manners are respectively marked as a distribution manner a1, a distribution manner b1, and a distribution manner c1. In FIG. 4B, a number after each RB set is set for distinguishing between RB sets, and RB sets with connected numbers are contiguous. A digit in a rectangular box in FIG. 4B is a priority value of each PSFCH.

In the distribution manner a1 shown in FIG. 4B, the five PSFCHs are distributed on an RB set-1, an RB set-2, an RB set-3, an RB set-4 and an RB set-5.

The PSFCH with a priority value of 1 is on the RB set-1, the PSFCH with a priority value of 2 is on the RB set-2, the PSFCH with a priority value of 3 is on the RB set-3, the PSFCH with a priority value of 4 is on the RB set-4, and the PSFCH with a priority value of 6 is on the RB set-5.

When the five PSFCHs are distributed in the distribution manner a1, the terminal device first determines an RB set on which a PSFCH with a smallest priority value is located, that is, determines the RB set-1 on which the PSFCH with the priority value of 1 is located. Because the RB sets on which the five PSFCHs are located include the RB set-2 contiguous to the RB set-1, and in addition, further include an RB set that is contiguous to the RB set contiguous to the RB set on which the PSFCH with the smallest priority value is located, that is, the RB sets on which the five PSFCHs are located include the RB set-3 contiguous to the RB set-2, the terminal device determines five contiguous RB sets (that is, N is equal to 5), and the five RB sets are respectively the RB set-1, the RB set-2, the RB set-3, the RB set-4, and the RB set-5.

In the distribution manner b1 shown in FIG. 4B, the five PSFCHs are distributed on the RB set-1, the RB set-3, the RB set-4, and the RB set-5, where the PSFCH with the priority value of 1 and the PSFCH with the priority value of 2 are on the RB set-1, the PSFCH with the priority value of 3 is on the RB set-3, the PSFCH with the priority value of 6 is on the RB set-4, and the PSFCH with the priority value of 4 is on the RB set-5.

When the five PSFCHs are distributed in the distribution manner b1, the terminal device first determines an RB set on which a PSFCH with a smallest priority value is located, that is, determines the RB set-1 on which the PSFCH with the priority value of 1 is located. Because the RB sets on which the five PSFCHs are located do not include an RB set contiguous to the RB set-1, the terminal device determines one RB set (that is, N is equal to 1), and the RB set is the RB set-1.

In the distribution manner c1 shown in FIG. 4B, the five PSFCHs are distributed on the RB set-1, the RB set-2, the RB set-4, and the RB set-5, where the PSFCH with the priority value of 2 is on the RB set-1, the PSFCH with the priority value of 1 and the PSFCH with the priority value of 3 are on the RB set-2, the PSFCH with the priority value of 4 is on the RB set-4, and the PSFCH with the priority value of 6 is on the RB set-5.

When the five PSFCHs are distributed in the distribution manner c1, the terminal device first determines an RB set on which a PSFCH with a smallest priority value is located, that is, determines the RB set-2 on which the PSFCH with the priority value of 1 is located. Because the RB sets on which the five PSFCHs are located include the RB set-2 contiguous to the RB set-1, and in addition, the RB sets on which the five PSFCHs are located (other than the RB set on which the PSFCH with the smallest priority value is located) do not include an RB set that is contiguous to the RB set contiguous to the RB set on which the PSFCH with the smallest priority value is located, that is, do not include an RB set contiguous to the RB set-2, the terminal device determines two contiguous RB sets (that is, N is equal to 2), and the two RB sets are respectively the RB set-1 and the RB set-2.

It can be learned from the foregoing example that when the terminal device determines that the RB sets on which the M PSFCHs are located include an RB set contiguous to the RB set on which the PSFCH with the smallest priority value is located, the N RB sets determined by the terminal device are a plurality of contiguous RB sets that include the RB set on which the PSFCH with the smallest priority value is located. To be specific, the N RB sets are a plurality of RB sets that are connected, adjacent, or head-to-tail adjacent.

The terminal device ensures, through step 402, that the N RB sets always include the RB set on which the PSFCH with the smallest priority value is located. Through step 401 and step 402, the terminal device determines the N RB sets from the RB sets on which the M PSFCHs are located. Then, the terminal device further determines finally sent PSFCHs from the N RB sets, that is, performs step 403.

**Step 403: The terminal device selects P PSFCHs from PSFCHs on the N RB sets, where the P PSFCHs are first P PSFCHs in the PSFCHs that are on the N RB sets and that are sorted in ascending order of priority values.**

The terminal device sorts the PSFCHs on the N RB sets in ascending order of priority values, and selects the first P PSFCHs from the sorted PSFCHs. In other words, the terminal device preferentially sends a high-priority PSFCH (a PSFCH with a low priority value) in the PSFCHs on the N RB sets. The P PSFCHs need to satisfy a limitation on a maximum PSFCH transmit quantity of the terminal device and/or maximum PSFCH transmit power of the terminal device. To be specific, P is not greater than the maximum PSFCH transmit quantity of the terminal device, and total power of the P PSFCHs is not greater than the maximum PSFCH transmit power of the terminal device.

The following describes a manner in which the terminal device selects the P PSFCHs with reference to a specific example. The distribution manners of the M PSFCHs shown in FIG. 4B are still used as an example.

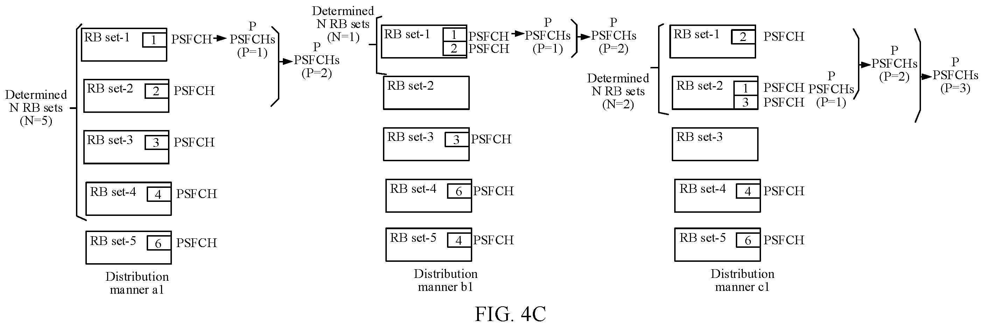

As shown in FIG. 4C, it is assumed that the maximum PSFCH transmit quantity of the terminal device is 2. When five PSFCHs are distributed in the distribution manner a1, after the terminal device determines the RB set-1, the RB set-2, the RB set-3, the RB set-4, and the RB set-5, the terminal device selects two PSFCHs in ascending order of priority values from the five PSFCHs on the RB set-1, the RB set-2, the RB set-3, the RB set-4, and the RB set-5, that is, selects the PSFCH with the priority value of 1 and the PSFCH with the priority value of 2. If total power of the two PSFCHs is not greater than the maximum transmit power of the terminal device, the two PSFCHs are the finally selected PSFCHs (that is, P is equal to 2). If the total power of the two PSFCHs is greater than the maximum transmit power of the terminal device, and total power of the PSFCH with the priority value of 1 is not greater than the maximum transmit power of the terminal device, the terminal device selects the PSFCH with the priority value of 1 (that is, P is equal to 1).

It is assumed that the maximum PSFCH transmit quantity of the terminal device is 2. When five PSFCHs are distributed in the distribution manner b1, after the terminal device determines the RB set-1, the terminal device selects two PSFCHs in ascending order of priority values from the two PSFCHs on the RB set-1, that is, selects the PSFCH with the priority value of 1 and the PSFCH with the priority value of 2. If total power of the two PSFCHs is not greater than the maximum transmit power of the terminal device, the two PSFCHs are the finally selected PSFCHs (that is, P is equal to 2). If the total power of the two PSFCHs is greater than the maximum transmit power of the terminal device, and total power of the PSFCH with the priority value of 1 is not greater than the maximum transmit power of the terminal device, the terminal device selects the PSFCH with the priority value of 1 (that is, P is equal to 1).

It is assumed that the maximum PSFCH transmit quantity of the terminal device is 2. When five PSFCHs are distributed in the distribution manner c1, after the terminal device determines the RB set-1 and the RB set-2, the terminal device selects two PSFCHs in ascending order of priority values from the three PSFCHs on the RB set-1 and the RB set-2, that is, selects the PSFCH with the priority value of 1 and the PSFCH with the priority value of 2. If total power of the two PSFCHs is not greater than the maximum transmit power of the terminal device, the two PSFCHs are the finally selected PSFCHs (that is, P is equal to 2). If the total power of the two PSFCHs is greater than the maximum transmit power of the terminal device, and total power of the PSFCH with the priority value of 1 is not greater than the maximum transmit power of the terminal device, the terminal device selects the PSFCH with the priority value of 1 (that is, P is equal to 1).

Through step 403, the terminal device determines the finally sent P PSFCHs from the PSFCHs on the N RB sets. Because the P PSFCHs are selected based on the priority values of the PSFCHs, it is ensured that the P PSFCHs include one or more PSFCHs with a smallest priority value in the M to-be-sent PSFCHs, and the terminal device can preferentially send a PSFCH with high importance.

When the terminal device determines the P PSFCHs from the PSFCHs on the N RB sets, RB sets on which the determined P PSFCHs are located may not be contiguous RB sets. In this case, the terminal device may repeatedly perform step 401 to step 403 until the RB sets on which the determined P PSFCHs are located are one RB set or contiguous RB sets. Alternatively, the terminal device may determine one RB set or contiguous RB sets from the RB sets on which the P PSFCHs are located, and send PSFCHs on the RB set or the contiguous RB sets. For another example, the terminal device may perform step 401 to step 403 for the RB sets on which the P PSFCHs are located (a difference lies only in that M in the foregoing steps is replaced with P, and P in the foregoing steps is replaced with another value, where the value satisfies the maximum PSFCH transmit quantity and the maximum PSFCH transmit power of the terminal device). For another example, the terminal device discards, from the RB sets on which the P PSFCHs are located, a non-contiguous RB set in the RB sets on which the P PSFCHs are located, determines one RB set or contiguous RB sets in the RB sets on which the P PSFCHs are located, and sends PSFCHs on the RB set or the contiguous RB sets.

**Step 404: The terminal device sends the P PSFCHs.**

An execution occasion of the embodiment shown in FIG. 4A is not limited in this embodiment of this application. For example, after performing LBT, the terminal device may perform the embodiment shown in FIG. 4A on RB sets on which the M PSFCHs are located and on which LBT is successfully performed.

For another example, when performing the embodiment shown in FIG. 4A, the terminal device performs LBT on the N RB sets after determining the N RB sets. When LBT is performed, if an RB set on which LBT is successfully performed in the N RB sets is not contiguous RB sets, the terminal device may determine one RB set or a plurality of contiguous RB sets (the RB set or the plurality of contiguous RB sets form a first resource group) from the RB set on which LBT is successfully performed in the N RB sets. For the RB set or the plurality of contiguous RB sets, the terminal device may select P PSFCHs from PSFCHs on the RB set or the plurality of contiguous RB sets. The P PSFCHs are first P PSFCHs in the PSFCHs that are on the N RB sets and that are sorted in ascending order of priority values (that is, step 403 is performed for the RB set or the plurality of contiguous RB sets). Then, step 404 is performed.

For another example, when performing the embodiment shown in FIG. 4A, after determining the P PSFCHs, the terminal device performs LBT on the RB sets on which the P PSFCHs are located. When LBT is performed, if an RB set on which LBT is successfully performed in the RB sets on which the P PSFCHs are located is not contiguous RB sets, the terminal device may determine one RB set or a plurality of contiguous RB sets (the RB set or the plurality of contiguous RB sets form a second resource group) from the RB set on which LBT is successfully performed in the RB sets on which the P PSFCHs are located, and send PSFCHs on the RB set or the plurality of contiguous RB sets.

In the embodiment shown in FIG. 4A, the terminal device first locates the RB set on which the PSFCH with the smallest priority value is located, then determines the N RB sets including the RB set on which the PSFCH with the smallest priority value is located, and sends the P PSFCHs on the N RB sets. In the foregoing manner, it can be ensured that the PSFCHs finally sent by the terminal device include a PSFCH with a highest priority. In addition, because a quantity of RB sets to be sent decreases, a quantity of PSFCHs that can be sent increases. In addition, the P PSFCHs are distributed on one RB set or a plurality of contiguous RB sets, and transmitting the P PSFCHs by the terminal device satisfies a capability of the terminal device for transmitting PSFCHs on contiguous frequency domain resources and/or non-contiguous frequency domain resources.

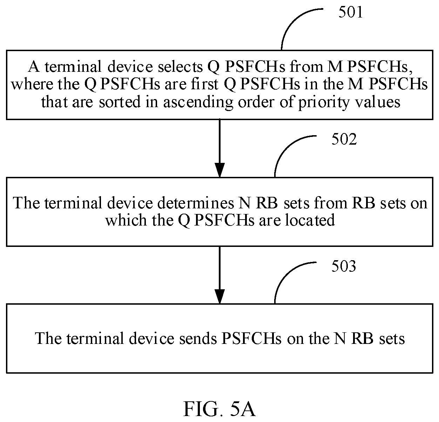

Manner 2. FIG. 5A shows a sidelink communication method according to an embodiment of this application. The method includes the following steps.

**Step 501: A terminal device selects Q PSFCHs from M PSFCHs, where the Q PSFCHs are first Q PSFCHs in the M PSFCHs that are sorted in ascending order of priority values.**

In other words, the terminal device preferentially sends a PSFCH with a small priority value from the M PSFCHs.

The terminal device sorts the M PSFCHs in ascending order of priority values, and selects the first Q PSFCHs from the sorted PSFCHs. To be specific, the terminal device preferentially sends a PSFCH with a low priority value in the M PSFCHs, and a quantity of sent PSFCHs is Q. The Q PSFCHs need to satisfy a limitation on a maximum PSFCH transmit quantity of the terminal device and/or maximum PSFCH transmit power of the terminal device. To be specific, Q is not greater than the maximum PSFCH transmit quantity of the terminal device, and/or total power of the Q PSFCHs is not greater than the maximum PSFCH transmit power (P_{c,max}) of the terminal device.

The following describes a manner in which the terminal device selects the Q PSFCHs with reference to a specific example. The distribution manners of the M PSFCHs shown in FIG. 4B are still used as an example.

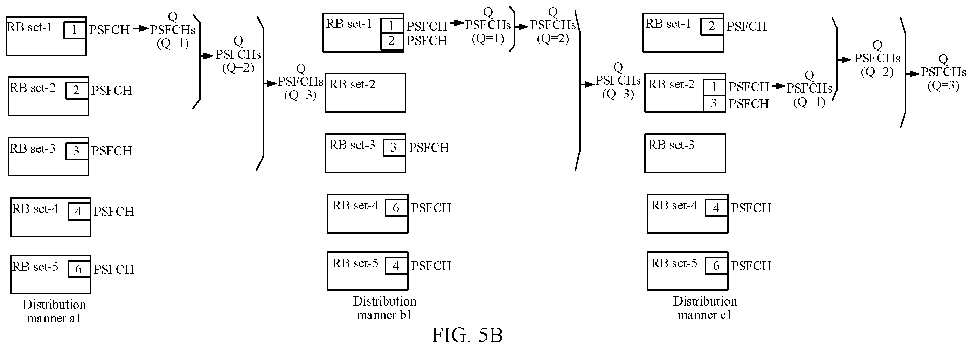

As shown in FIG. 5B, it is assumed that the maximum PSFCH transmit quantity of the terminal device is 3. When five PSFCHs are distributed in the distribution manner a1, the distribution manner b1, or the distribution manner c1, the terminal device selects three PSFCHs in ascending order of priority values from the five PSFCHs, that is, selects the PSFCH with the priority value of 1, the PSFCH with the priority value of 2, and the PSFCH with the priority value of 3. If total power of the three PSFCHs is not greater than the maximum transmit power of the terminal device, the three PSFCHs are finally selected PSFCHs (that is, Q is equal to 3). If the total power of the three PSFCHs is greater than the maximum transmit power of the terminal device, and total power of the PSFCH with the priority value of 1 and the PSFCH with the priority value of 2 is not greater than the maximum transmit power of the terminal device, the terminal device selects the PSFCH with the priority value of 1 and the PSFCH with the priority value of 2 (that is, Q is equal to 2). If the total power of the three PSFCHs is greater than the maximum transmit power of the terminal device, the total power of the PSFCH with the priority value of 1 and the PSFCH with the priority value of 2 is greater than the maximum transmit power of the terminal device, and power of the PSFCH with the priority value of 1 is not greater than the maximum transmit power of the terminal device, the terminal device selects the PSFCH with the priority value of 1 (that is, Q is equal to 1).

Through step 501, the terminal device determines the Q PSFCHs from the M PSFCHs. Because the Q PSFCHs are selected based on the priority values of the PSFCHs, it is ensured that the Q PSFCHs include one or more PSFCHs ranked top in the M to-be-sent PSFCHs that are sorted based on the priority values.

This step and the following step 502 are performed simultaneously. In this case, step 501 may alternatively be an optional step. To be specific, the terminal device determines L PSFCHs from the M PSFCHs, where the L PSFCHs are located on N RB sets. When determining the L PSFCHs from the M PSFCHs, the terminal device first preferentially sends a PSFCH with a small priority value in the M PSFCHs, and then sends PSFCHs on contiguous RB sets. The descriptions herein are not a time sequence of the two sending actions, but are a limitation on two features of the sending actions.

**Step 502: The terminal device determines the N RB sets from RB sets on which the Q PSFCHs are located.**

Step 502 may also be understood as that the terminal device determines PSFCHs on the N RB sets. The following uses only an example in which the terminal device determines the N RB sets for description. Actually, in a process of determining the N RB sets, the terminal device essentially determines, from the Q PSFCHs, PSFCHs on one RB set or a plurality of contiguous RB sets (for example, L PSFCHs on one RB set or a plurality of contiguous RB sets), where the RB set or the plurality of contiguous RB sets are the N RB sets.

The Q PSFCHs may be distributed on a same RB set, or may be distributed on a plurality of RB sets. The terminal device selects, through step 502 from the RB sets on which the Q PSFCHs are located, one RB set or a plurality of contiguous RB sets as the N RB sets.

There are a plurality of manners in which the terminal device determines the N RB sets from the RB sets on which the Q PSFCHs are located. A specific manner used by the terminal device to determine the N RB sets from the RB sets on which the Q PSFCHs are located is not limited in this embodiment of this application. The following lists two possible manners for determining the N RB sets.

Determination manner 1. The terminal device determines, based on priority values of the Q PSFCHs, the N RB sets from the RB sets on which the Q PSFCHs are located. When N is equal to 1, the determined RB set is an RB set on which a PSFCH with a smallest priority value in the Q PSFCHs is located. When N is greater than 1, the determined N RB sets are a plurality of contiguous RB sets including an RB set on which a PSFCH with a smallest priority value in the Q PSFCHs is located. In other words, when N is equal to 1, the determined RB set is an RB set on which a PSFCH with a smallest priority value in the M PSFCHs is located. When N is greater than 1, the determined N RB sets are a plurality of contiguous RB sets including an RB set on which a PSFCH with a smallest priority value in the M PSFCHs is located. In this case, the PSFCH with the smallest priority value in the M PSFCHs and the PSFCH with the smallest priority value in the Q PSFCHs may be a same PSFCH. In other words, when N is equal to 1, the determined RB set includes the PSFCH with the smallest priority value in the M (or Q) PSFCHs. When N is greater than 1, the determined N RB sets include the PSFCH with the smallest priority value in the M (or Q) PSFCHs; and the N RB sets are a plurality of contiguous RB sets.

To be specific, the terminal device preferentially sends a PSFCH with a small priority value, and an RB set on which the sent PSFCH is located is adjacent RB sets or one RB set (or contiguous RB sets). When there is one RB set, there is no PSFCH on an RB set adjacent to the RB set, or the terminal device can send PSFCHs only on the RB set due to a limitation of the maximum PSFCH transmit quantity of the terminal device and/or the maximum PSFCH transmit power of the terminal device.

In this determination manner, after preferentially determining the RB set on which the PSFCH with the smallest priority value in the Q PSFCHs is located, the terminal device determines whether the RB sets on which the Q PSFCHs are located include an RB set contiguous to the RB set on which the PSFCH with the smallest priority value is located.

If the RB sets on which the Q PSFCHs are located do not include an RB set contiguous to the RB set on which the PSFCH with the smallest priority value is located, N is equal to 1, and the RB set determined by the terminal device is the RB set on which the PSFCH with the smallest priority value is located.

If the RB sets on which the Q PSFCHs are located include an RB set contiguous to the RB set on which the PSFCH with the smallest priority value is located, N is greater than 1, the terminal device determines N contiguous RB sets, and the N RB sets include the RB set on which the PSFCH with the smallest priority value is located and the RB set contiguous to the RB set on which the PSFCH with the smallest priority value is located. If the RB sets on which the Q PSFCHs are located include an RB set that is contiguous to the RB set contiguous to the RB set on which the PSFCH with the smallest priority value is located, the N RB sets further include the RB set that is contiguous to the RB set contiguous to the RB set on which the PSFCH with the smallest priority value is located. To be specific, the N RB sets are N connected (head-to-tail connected or adjacent) RB sets that include the RB set on which the PSFCH with the smallest priority value is located. The RB sets on which the Q PSFCHs are located include a plurality of groups of RB sets, and each group of RB sets include one RB set or a plurality of contiguous RB sets. A case in which a group of RB sets include one RB set means that the RB sets on which the Q PSFCHs are located do not include an RB set contiguous to the RB set included in the group of RB sets, and the RB set forms an independent group. The terminal device selects a group of RB sets on which the PSFCH with the smallest priority value is located as the N RB sets.

The following describes a manner in which the terminal device determines the N RB sets with reference to a specific example. The distribution manners of the M PSFCHs shown in FIG. 4B are still used as an example.

It is assumed that the Q PSFCHs selected by the terminal device are respectively the PSFCH with the priority value of 1, the PSFCH with the priority value of 2, and the PSFCH with the priority value of 3.

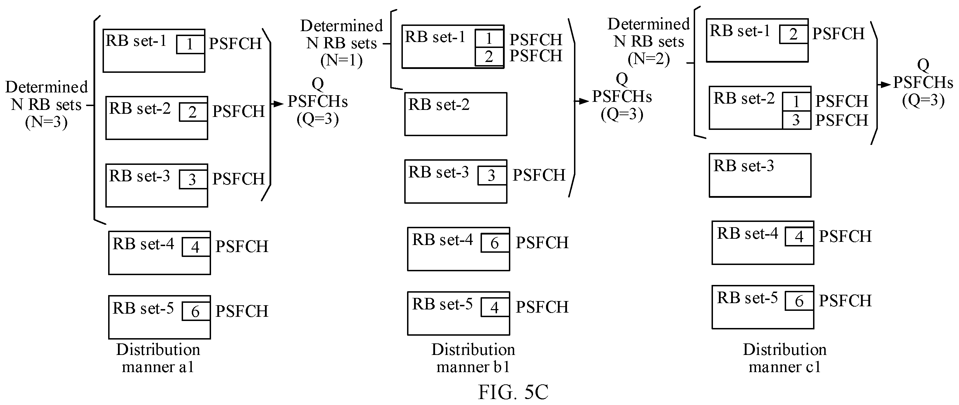

As shown in FIG. 5C, when five PSFCHs are distributed in the manner a1, the terminal device determines an RB set on which a PSFCH with a smallest priority value is located, that is, determines the RB set-1 on which the PSFCH with the priority value of 1 is located. Because the RB sets on which the three PSFCHs are located include the RB set-2 contiguous to the RB set-1, and further include an RB set that is contiguous to the RB set contiguous to the RB set on which the PSFCH with the smallest priority value is located. In other words, the RB sets on which the three PSFCHs are located include the RB set-3 contiguous to the RB set-2. In this case, the terminal device determines three contiguous RB sets (that is, N is equal to 3), and the three RB sets are respectively the RB set-1, the RB set-2, and the RB set-3.

As shown in FIG. 5C, when five PSFCHs are distributed in the manner b1, the terminal device determines an RB set on which a PSFCH with a smallest priority value is located, that is, determines the RB set-1 on which the PSFCH with the priority value of 1 is located. Because the RB sets on which the three PSFCHs are located do not include an RB set contiguous to the RB set-1, the terminal device determines one RB set (that is, N is equal to 1), and the RB set is the RB set-1.

As shown in FIG. 5C, when five PSFCHs are distributed in the manner c1, the terminal device determines an RB set on which a PSFCH with a smallest priority value is located, that is, determines the RB set-2 on which the PSFCH with the priority value of 1 is located. Because the RB sets on which the three PSFCHs are located include the RB set-2 contiguous to the RB set-1, the terminal device determines two contiguous RB sets (that is, N is equal to 2), and the two RB sets are respectively the RB set-1 and the RB set-2.

In this manner, the N RB sets determined by the terminal device include the RB set on which the PSFCH with the smallest priority value in the M PSFCHs is located.

When there is more than one PSFCH with the smallest priority value in the M PSFCHs, the N RB sets determined by the terminal device are a group of RB sets that are in a plurality of groups of RB sets including an RB set on which the PSFCH with the smallest priority value in the M PSFCHs is located and that include a largest quantity of RB sets (the group of RB sets include one RB set or a plurality of contiguous RB sets). Alternatively, the N RB sets determined by the terminal device are a group of RB sets including an RB set on which the PSFCH with the smallest priority value in the M PSFCHs is located, and the group of RB sets include a largest quantity of PSFCHs. Alternatively, the N RB sets determined by the terminal device are a group of RB sets including an RB set with a largest quantity of PSFCHs in the M PSFCHs is located and an RB set on which the PSFCH with the smallest priority value is located. Alternatively, the terminal device randomly selects one group of RB sets or randomly selects one group of RB sets from the plurality of groups of RB sets. Each group of RB sets in the plurality of groups of RB sets include the PSFCH with the smallest priority value in the M PSFCHs (include an RB set on which the PSFCH with the smallest priority value in the M PSFCHs is located).

Determination manner 2. The terminal device may divide the RB sets on which the Q PSFCHs are located into a plurality of groups of RB sets (or the RB sets on which the Q PSFCHs are located include a plurality of groups of RB sets), and each group of RB sets include one RB set or a plurality of contiguous RB sets. A case in which a group of RB sets include one RB set means that the RB sets on which the Q PSFCHs are located do not include an RB set contiguous to the RB set included in the group of RB sets, and the RB set forms an independent group. The terminal device selects a group of RB sets with a largest quantity of PSFCHs as the N RB sets.

The following describes a manner in which the terminal device determines the N RB sets with reference to a specific example. The distribution manners of the M PSFCHs shown in FIG. 4B are still used as an example.

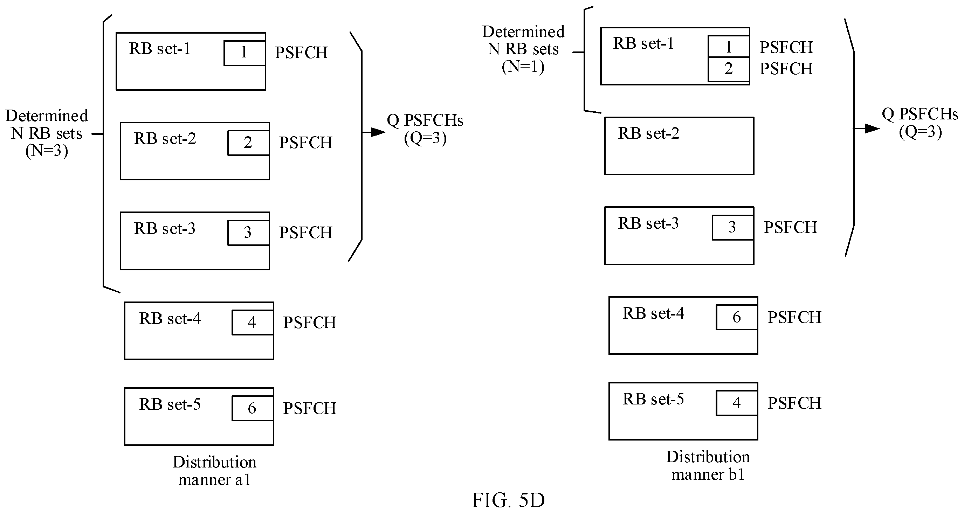

As shown in FIG. 5D, it is assumed that the Q PSFCHs selected by the terminal device are respectively the PSFCH with the priority value of 1, the PSFCH with the priority value of 2, and the PSFCH with the priority value of 3.

When five PSFCHs are distributed in the manner a1, because the RB sets on which the Q PSFCHs are located are respectively the RB set-1, the RB set-2, and the RB set-3, the RB set-1, the RB set-2, and the RB set-3 are contiguous RB sets. No matter how the RB sets on which the Q PSFCHs are located are divided, a quantity of PSFCHs on a group of RB sets including the three RB sets is definitely the largest. Therefore, the terminal device may directly determine that the N RB sets are the RB set-1, the RB set-2, and the RB set-3 (N is equal to 3).

When five PSFCHs are distributed in the manner b1, the RB sets on which the Q PSFCHs are located may be divided into two groups of RB sets, where one group of RB sets include the RB set-1, and the other group of RB sets include the RB set-3. A quantity (2) of PSFCHs on the RB set-1 is greater than a quantity (1) of PSFCHs on the RB set-3. In this case, the N RB sets determined by the terminal device are the RB set-1 (N is equal to 1).

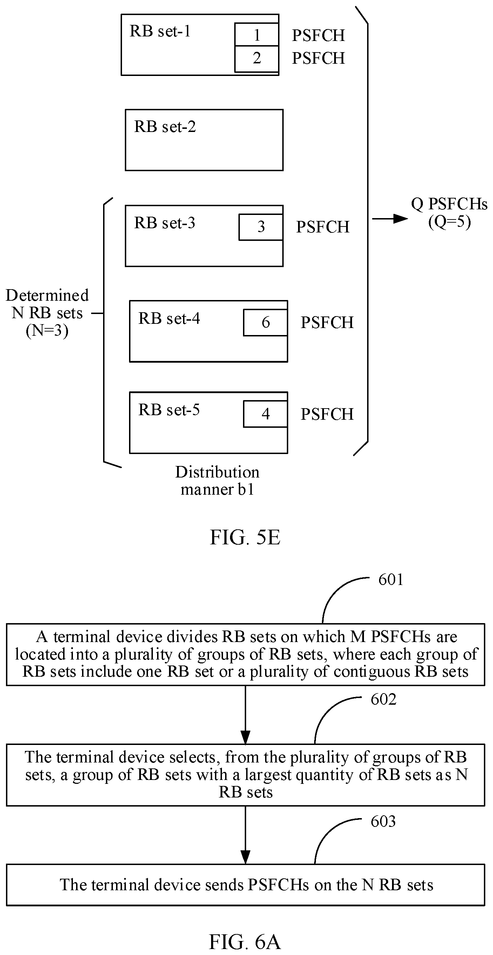

As shown in FIG. 5E, it is assumed that the Q PSFCHs selected by the terminal device are respectively the PSFCH with the priority value of 1, the PSFCH with the priority value of 2, the PSFCH with the priority value of 3, the PSFCH with the priority value of 4, and the PSFCH with the priority value of 6.

The distribution manner b1 shown in FIG. 4B is used as an example. The RB sets on which the five PSFCHs are located may be divided into two groups of RB sets, where one group of RB sets include the RB set-1 (marked as a group 1), and the other group of RB sets include the RB set-3, the RB set-4, and the RB set-5 (marked as a group 2). Because the RB set in the group 1 includes two PSFCHs, and the RB sets in the group 2 include three PSFCHs, the terminal device may use the RB sets included in the group 2 as the N RB sets (N is equal to 3).

It should be noted that, if the plurality of groups of RB sets formed by dividing the RB sets on which the Q PSFCHs are located include a plurality of groups of RB sets including a largest quantity of PSFCHs, that is, the plurality of groups of RB sets include at least two groups of RB sets, quantities of PSFCHs on the at least two groups of RB sets are the same, and the quantity of PSFCHs is the largest. The terminal device may further select, from the at least two groups of RB sets, a group of RB sets on which a PSFCH with a smallest priority value is located as the N RB sets; select, from the at least two groups of RB sets, a group of RB sets with a largest quantity of RB sets as the N RB sets; or select a group of RB sets in which an RB set with a largest quantity of PSFCHs is located as the N RB sets. Alternatively, the terminal device randomly selects one group of RB sets or randomly selects one group of RB sets from the at least two groups of RB sets.

Determination manner 3. The RB sets on which the Q PSFCHs are located may be divided into a plurality of groups of RB sets, and each group of RB sets include one RB set or a plurality of contiguous RB sets. A case in which a group of RB sets include one RB set means that the RB sets on which the Q PSFCHs are located do not include an RB set contiguous to the RB set included in the group of RB sets, and the RB set forms an independent group. The terminal device selects a group of RB sets with a largest quantity of RB sets as the N RB sets.

The following describes a manner in which the terminal device determines the N RB sets with reference to a specific example. The distribution manners of the M PSFCHs shown in FIG. 4B are still used as an example.

It is assumed that the Q PSFCHs selected by the terminal device are respectively the PSFCH with the priority value of 1, the PSFCH with the priority value of 2, and the PSFCH with the priority value of 3.

When five PSFCHs are distributed in the manner a1, because the RB sets on which the Q PSFCHs are located are respectively the RB set-1, the RB set-2, and the RB set-3, the RB set-1, the RB set-2, and the RB set-3 are contiguous RB sets, and the terminal device may directly determine that the N RB sets are the RB set-1, the RB set-2, and the RB set-3 (N is equal to 3).

It is assumed that the Q PSFCHs selected by the terminal device are respectively the PSFCH with the priority value of 1, the PSFCH with the priority value of 2, the PSFCH with the priority value of 3, the PSFCH with the priority value of 4, and the PSFCH with the priority value of 6.

As shown in FIG. 5E, the distribution manner b1 shown in FIG. 4B is used as an example. The RB sets on which the five PSFCHs are located may be divided into two groups of RB sets, where one group of RB sets include the RB set-1 (marked as a group 1), and the other group of RB sets include the RB set-3, the RB set-4, and the RB set-5 (marked as a group 2). Because the group 1 includes only one RB set, and the group 2 includes three RB sets, the terminal device may use the RB sets included in the group 2 as the N RB sets (N is equal to 3).

It should be noted that, if the plurality of groups of RB sets formed by dividing the RB sets on which the Q PSFCHs are located include a plurality of groups of RB sets including a largest quantity of RB sets, that is, the plurality of groups of RB sets include at least two groups of RB sets, quantities of RB sets in the at least two groups of RB sets are the same, and the quantity of RB sets is the largest. The terminal device may further select, from the at least two groups of RB sets, a group of RB sets on which a PSFCH with a smallest priority value is located as the N RB sets; select, from the at least two groups of RB sets, a group of RB sets with a largest quantity of PSFCHs as the N RB sets; or select, from the at least two groups of RB sets, a group of RB sets in which an RB set with a largest quantity of PSFCHs is located as the N RB sets. Alternatively, the terminal device randomly selects one group of RB sets or randomly selects one group of RB sets from the at least two groups of RB sets.

Determination manner 4. The terminal device determines the N RB sets from the RB sets on which the Q PSFCHs are located. When N is equal to 1, the determined RB set is an RB set with a largest quantity of PSFCHs in the RB sets on which the Q PSFCHs are located. When N is greater than 1, the determined N RB sets are a plurality of contiguous RB sets including an RB set with a largest quantity of PSFCHs.

It should be noted that when there is more than one RB set including a largest quantity of PSFCHs in the M PSFCHs, the N RB sets determined by the terminal device are a group of RB sets including an RB set on which a PSFCH with a smallest priority value in the M PSFCHs is located and an RB set with a largest quantity of PSFCHs (the group of RB sets include one RB set or a plurality of contiguous RB sets). Alternatively, the N RB sets determined by the terminal device are a group of RB sets including an RB set with a largest quantity of PSFCHs, and the group of RB sets include a largest quantity of PSFCHs. Alternatively, the N RB sets determined by the terminal device are a group of RB sets including an RB set with a largest quantity of PSFCHs, and the group of RB sets include a largest quantity of RB sets. Alternatively, the terminal device randomly selects one group of RB sets or randomly selects one group of RB sets from the plurality of groups of RB sets. Any group of RB sets in the plurality of groups of RB sets include an RB set with a largest quantity of PSFCHs.

Through step 501 and step 502, the terminal device determines the N RB sets, and after determining the N RB sets, the terminal device may perform step 503.

**Step 503: The terminal device sends PSFCHs on the N RB sets.** To be specific, the terminal device discards a PSFCH in the M PSFCHs other than the PSFCHs on the N RB sets, and sends only the PSFCHs on the N RB sets.

Optionally, the PSFCHs sent by the terminal device on the N RB sets may be PSFCHs that are in the Q PSFCHs and that are located on the N RB sets.

Optionally, that the terminal device sends the PSFCHs on the N RB sets includes: The terminal device preferentially sends a PSFCH with a small priority value in the PSFCHs that are in the M PSFCHs and that are located on the N RB sets (that is, step 501 is performed on the PSFCHs that are in the M PSFCHs and that are located on the N RB sets). In addition, a PSFCH transmit quantity upper limit and maximum PSFCH transmit power of the terminal device are satisfied. In this case, a quantity of the sent PSFCHs may be different from Q.

Similarly, an execution occasion of the embodiment shown in FIG. 5A is also not limited in this embodiment of this application. For example, after performing LBT, the terminal device may perform the embodiment shown in FIG. 5A on RB sets on which the M PSFCHs are located and on which LBT is successfully performed. To be specific, the terminal device determines to-be-sent PSFCHs, and PSFCHs on the RB set on which LBT is successfully performed in RB sets on which the to-be-sent PSFCHs are located are the M PSFCHs.

For another example, when the terminal device performs the embodiment shown in FIG. 5A, after performing step 501, the terminal device determines the Q PSFCHs. The terminal device may perform LBT on the RB sets on which the Q PSFCHs are located. When performing LBT, if an RB set on which LBT is successfully performed in the RB sets on which the Q PSFCHs are located is not contiguous RB sets, the terminal device may determine N RB sets from the RB set on which LBT is successfully performed in the RB sets on which the Q PSFCHs are located. The N RB sets are a group of RB sets in the RB sets on which the Q PSFCHs are located, the group of RB sets include one RB set or a plurality of contiguous RB sets, and the group of RB sets include an RB set on which a PSFCH with a smallest priority value is located, or the group of RB sets include an RB set with a largest quantity of PSFCHs, or the group of RB sets are a group of RB sets with a largest quantity of PSFCHs in the RB set on which LBT is successfully performed. In this embodiment of this application, a manner in which the terminal device determines a group of RB sets from the RB set on which LBT is successfully performed in the RB sets on which the Q PSFCHs are located is not limited.

For another example, when the terminal device performs the embodiment shown in FIG. 5A, after performing step 502, the terminal device determines the N RB sets, and the terminal device performs LBT on the N RB sets. When LBT is performed, if an RB set on which LBT is successfully performed in the N RB sets is not contiguous RB sets, the terminal device may determine a group of RB sets (that is, a third resource group) from the RB set on which LBT is successfully performed in the N RB sets. The group of RB sets include one RB set or a plurality of contiguous RB sets. A manner in which the terminal device determines a group of RB sets from the RB set on which LBT is successfully performed in the N RB sets is similar to the manner of determining a group of RB sets from the RB set on which LBT is successfully performed in the RB sets on which the Q PSFCHs are located. For details, refer to the foregoing descriptions. After determining the group of RB sets, the terminal device sends PSFCHs on the group of RB sets.

In the embodiment shown in FIG. 5A, the terminal device first locates the RB sets on which the first Q PSFCHs obtained after sorting based on the priority values are located, then determines the N RB sets from the RB sets on which the Q PSFCHs are located, and sends the PSFCHs on the N RB sets. In the foregoing manner, the PSFCHs finally sent by the terminal device are a part or all of the Q PSFCHs with high importance, so that the terminal device can send an important PSFCH. In addition, the part or all of the Q PSFCHs are distributed on one RB set or a plurality of contiguous RB sets, and transmitting the part or all of the Q PSFCHs by the terminal device satisfies a capability of the terminal device for transmitting PSFCHs on contiguous frequency domain resources and/or non-contiguous frequency domain resources.

During actual application, the RB sets on which the M to-be-sent PSFCHs are located may be divided into a plurality of groups of RB sets, and each group of RB sets include one RB set or a plurality of contiguous RB sets. The terminal device selects a group of RB sets as the N RB sets. Embodiments of this application provide two sidelink communication methods, to determine a group of RB sets from the plurality of groups of RB sets as the N RB sets, and send PSFCHs on the determined N RB sets. For details, refer to Manner 3 and Manner 4.

**Manner 3.** FIG. 6A shows a sidelink communication method according to an embodiment of this application. The method includes the following steps.

**Step 601: A terminal device divides RB sets on which M PSFCHs are located into a plurality of groups of RB sets, where each group of RB sets include one RB set or a plurality of contiguous RB sets. A case in which a group of RB sets include one RB set means that the RB sets on which the M PSFCHs are located do not include an RB set contiguous to the RB set included in the group of RB sets, and the RB set forms an independent group.**

**In other words, the RB set is non-contiguous to an RB set in the RB sets on which the M PSFCHs are located other than the RB set. Contiguous RB sets may also be understood as that the RB sets are connected, adjacent, or head-to-tail connected, or that indexes of the RB sets are connected.**

The following describes a manner in which the terminal device divides the RB sets on which the M PSFCHs are located into a plurality of groups of RB sets with reference to a specific example. The distribution manners of the M PSFCHs shown in FIG. 4B are still used as an example.

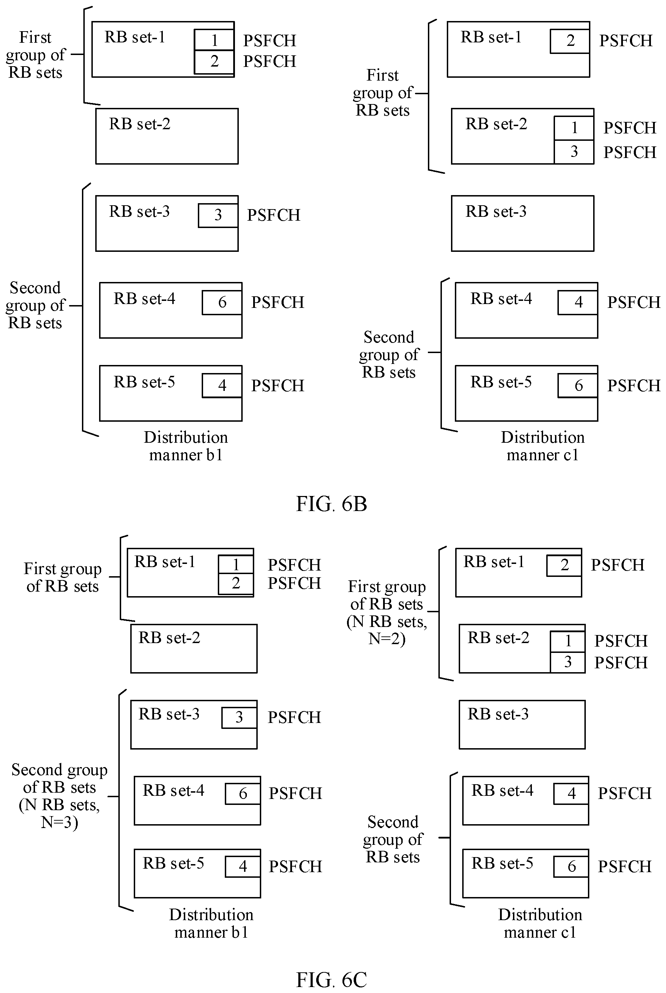

Refer to FIG. 6B. When five PSFCHs are distributed in the distribution manner b1, the terminal device divides the RB sets on which the M PSFCHs are located into two groups of RB sets, where a first group of RB sets include the RB set-1, and a second group of RB sets include the RB set-3, the RB set-4, and the RB set-5.

Refer to FIG. 6B. When five PSFCHs are distributed in the distribution manner c1, the terminal device divides the RB sets on which the M PSFCHs are located into two groups of RB sets, where a first group of RB sets include the RB set-1 and the RB set-2, and a second group of RB sets include the RB set-4 and the RB set-5.

It should be noted that, to help quickly determine the N RB sets, when the terminal device divides the RB sets on which the M PSFCHs are located into a plurality of groups of RB sets, the following division rule needs to be followed: The plurality of formed groups of RB sets do not overlap, that is, any RB set cannot belong to a plurality of groups of RB sets. In addition, for any group of RB sets, any RB set included in the group of RB sets is non-contiguous to an RB set in the RB sets on which the M PSFCHs are located other than the group of RB sets. According to the division rule, when five PSFCHs are distributed in the distribution manner a1 shown in FIG. 4B, only one group of RB sets can be formed. In this case, there is no subsequent operation of selecting a group of RB sets from the plurality of groups of RB sets as N RB sets.

**Step 602: The terminal device selects, from the plurality of groups of RB sets, a group of RB sets with a largest quantity of RB sets as the N RB sets.**

The terminal device compares quantities of RB sets in the groups of RB sets, and the group of RB sets with the largest quantity of RB sets are the N RB sets.

If the plurality of groups of RB sets include only one group of RB sets with the largest quantity of RB sets, for ease of description, the group of RB sets with the largest quantity of RB sets in the plurality of groups of RB sets are referred to as a first candidate group. The terminal device may directly use the first candidate group as the N RB sets.

The following describes a manner in which the terminal device selects the N RB sets with reference to a specific example. The distribution manners of the M PSFCHs shown in FIG. 4B are still used as an example.

Refer to FIG. 6C. When five PSFCHs are distributed in the distribution manner b1, the terminal device divides the RB sets on which the M PSFCHs are located into two groups of RB sets, where a first group of RB sets include the RB set-1, and a second group of RB sets include the RB set-3, the RB set-4, and the RB set-5. The two groups of RB sets include only one first candidate group, and the first candidate group is the second group of RB sets. The terminal device selects the second group of RB sets as the N RB sets.

If the plurality of groups of RB sets include a plurality of first candidate groups, the terminal device may select one first candidate group from the plurality of first candidate groups as the N RB sets.

This embodiment of this application provides two manners of selecting one first candidate group from the plurality of first candidate groups as the N RB sets. The following separately describes the manners.

Selection manner 1. The terminal device selects, from the plurality of first candidate groups, a first candidate group with a largest quantity of PSFCHs as the N RB sets.

The terminal device compares quantities of PSFCHs on the first candidate groups, and RB sets included in the first candidate group with the largest quantity of PSFCHs are the N RB sets.

The following describes a manner in which the terminal device selects the N RB sets with reference to a specific example. The distribution manners of the M PSFCHs shown in FIG. 4B are still used as an example.

Refer to FIG. 6C. When five PSFCHs are distributed in the distribution manner c1, the terminal device divides the RB sets on which the M PSFCHs are located into two groups of RB sets, where a first group of RB sets include the RB set-1 and the RB set-2, and a second group of RB sets include the RB set-4 and the RB set-5. Both the first group of RB sets and the second group of RB sets are first candidate groups. The terminal device needs to further compare a quantity of PSFCHs on the first group of RB sets and a quantity of PSFCHs on the second group of RB sets. The first group of RB sets include two PSFCHs: the PSFCH with the priority value of 1 and the PSFCH with the priority value of 2. The second group of RB sets include three PSFCHs: the PSFCH with the priority value of 3, the PSFCH with the priority value of 6, and the PSFCH with the priority value of 4. The terminal device may select the second group of RB sets as the N RB sets.

Selection manner 2. The terminal device selects, from the plurality of first candidate groups, a first candidate group on which a PSFCH with a smallest priority value is located as the N RB sets. The PSFCH with the smallest priority value herein is a PSFCH with a smallest priority value in all PSFCHs on the plurality of first candidate groups.

The terminal device determines priority values of PSFCHs on the first candidate groups, and RB sets included in the first candidate group on which the PSFCH with the smallest priority value is located are the N RB sets.

The following describes a manner in which the terminal device selects the N RB sets with reference to a specific example. The distribution manners of the M PSFCHs shown in FIG. 4B are still used as an example.

Refer to FIG. 6C. When five PSFCHs are distributed in the distribution manner c1, the terminal device divides the RB sets on which the M PSFCHs are located into two groups of RB sets, where a first group of RB sets include the RB set-1 and the RB set-2, and a second group of RB sets include the RB set-4 and the RB set-5. Both the first group of RB sets and the second group of RB sets are first candidate groups. The terminal device needs to further compare priority values of PSFCHs on the first group of RB sets and priority values of PSFCHs on the second group of RB sets. The first group of RB sets include two PSFCHs: the PSFCH with the priority value of 1 and the PSFCH with the priority value of 2. The second group of RB sets include three PSFCHs: the PSFCH with the priority value of 3, the PSFCH with the priority value of 6, and the PSFCH with the priority value of 4. The terminal device may select the first group of RB sets as the N RB sets.

Selection manner 3. The terminal device selects, from the plurality of first candidate groups, a first candidate group on which an RB set with a largest quantity of PSFCHs is located as the N RB sets.

The terminal device compares a quantity of PSFCHs on each RB set in each first candidate group, and determines an RB set with a largest quantity of PSFCHs. The first candidate group on which the RB set with the largest quantity of PSFCHs is located is the N RB sets.

Selection manner 4. The terminal device randomly selects one first candidate group or randomly selects one first candidate group from the plurality of first candidate groups as the N RB sets.

Through step 601 and step 602, the terminal device determines the N RB sets, and the terminal device may send PSFCHs on the N RB sets, that is, perform step 603.

**Step 603: The terminal device sends the PSFCHs on the N RB sets. When the terminal device sends the PSFCHs on the N RB sets, the terminal device may send all of the PSFCHs on the N RB sets, or may send a part of the PSFCHs on the N RB sets.**

When performing step 603, the terminal device may select P PSFCHs from the PSFCHs on the N RB sets, where the P PSFCHs are first P PSFCHs in the PSFCHs that are on the N RB sets and that are sorted in ascending order of priority values.

The terminal device sorts the PSFCHs on the N RB sets in ascending order of priority values, and selects the first P PSFCHs from the sorted PSFCHs. The P PSFCHs need to satisfy a limitation on a maximum PSFCH transmit quantity of the terminal device and maximum PSFCH transmit power of the terminal device. To be specific, P is not greater than the maximum PSFCH transmit quantity of the terminal device, and total power of the P PSFCHs is not greater than the maximum PSFCH transmit power of the terminal device.

After the terminal device selects the P PSFCHs from the PSFCHs on the N RB sets, the terminal device sends the P PSFCHs.

When the terminal device determines the P PSFCHs from the PSFCHs on the N RB sets, RB sets on which the determined P PSFCHs are located may not be contiguous RB sets. In this case, for a processing manner of the terminal device, refer to the related descriptions in step 403. A difference lies in that, in this case, the terminal device may further repeatedly perform step 601 to step 603 until the RB sets on which the determined P PSFCHs are located are one RB set or contiguous RB sets. Alternatively, the terminal device may perform step 601 to step 603 for the RB sets on which the P PSFCHs are located (a difference lies only in that M in the foregoing steps is replaced with P, and P in the foregoing steps is replaced with another value, where the value is a value that satisfies the maximum PSFCH transmit quantity and the maximum PSFCH transmit power of the terminal device), until the RB sets on which the finally determined PSFCHs are located are one RB set or contiguous RB sets.

Similarly, an execution occasion of the embodiment shown in FIG. 6A is also not limited in this embodiment of this application. For example, after performing LBT, the terminal device may perform the embodiment shown in FIG. 6A on RB sets on which the M PSFCHs are located and on which LBT is successfully performed. For another example, after performing the embodiment shown in FIG. 6A and performing LBT on the determined N RB sets, the terminal device then sends PSFCHs on an RB set on which LBT is successfully performed in the N RB sets. However, in this manner, there is a case in which the RB set on which LBT is successfully performed in the N RB sets is not contiguous RB sets. In this case, a solution provided for the terminal device is similar to the solution provided in a similar case in which LBT is performed on the determined N RB sets after the embodiment shown in FIG. 4A is performed. For details, refer to the foregoing descriptions. Details are not described herein again.

In the embodiment shown in FIG. 6A, the terminal device groups the RB sets on which the M PSFCHs are located, uses the group of RB sets with the largest quantity of RB sets as the N RB sets, and sends the PSFCHs on the N RB sets. In this manner, the N RB sets determined by the terminal device include a large quantity of RB sets, so as to ensure that the terminal device can transmit the PSFCHs on a large quantity of frequency domain resource units, and a PSFCH transmission process satisfies a capability of the terminal device for transmitting PSFCHs on contiguous frequency domain resources and/or non-contiguous frequency domain resources.

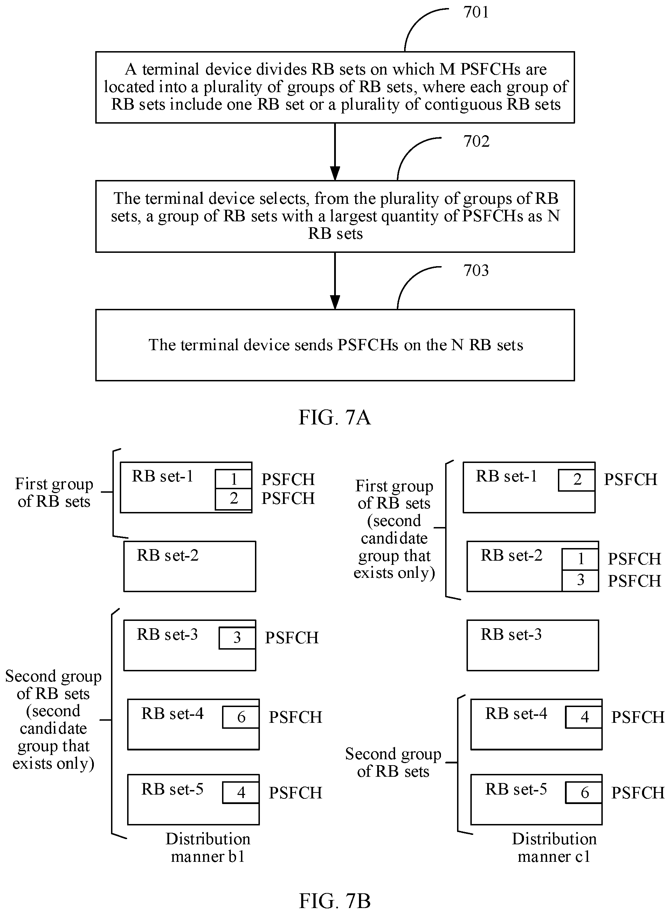

Manner 4. FIG. 7A shows a sidelink communication method according to an embodiment of this application. The method includes the following steps.

**Step 701: A terminal device divides RB sets on which M PSFCHs are located into a plurality of groups of RB sets, where each group of RB sets include one RB set or a plurality of contiguous RB sets. A case in which a group of RB sets include one RB set means that the RB sets on which the M PSFCHs are located do not include an RB set contiguous to the RB set included in the group of RB sets, and the RB set forms an independent group. In other words, the RB set is non-contiguous to an RB set in the RB sets on which the M PSFCHs are located other than the RB set. A manner in which the terminal device performs step 701 is similar to the manner in which the terminal device performs step 601. For details, refer to the foregoing descriptions. Details are not described herein again.**

**Step 702: The terminal device selects, from the plurality of groups of RB sets, a group of RB sets with a largest quantity of PSFCHs as the N RB sets.**

The terminal device compares quantities of PSFCHs on the groups of RB sets, and the group of RB sets with the largest quantity of PSFCHs are the N RB sets.

If the plurality of groups of RB sets include only one group of RB sets with the largest quantity of PSFCHs, for ease of description, the group of RB sets with the largest quantity of PSFCHs in the plurality of groups of RB sets are referred to as a second candidate group, that is, the plurality of groups of RB sets include one second candidate group. The terminal device may directly use the second candidate group as the N RB sets.

The following describes a manner in which the terminal device selects the N RB sets with reference to a specific example. The distribution manners of the M PSFCHs shown in FIG. 4B are still used as an example.

Refer to FIG. 7B. When five PSFCHs are distributed in the distribution manner b1, the terminal device divides the RB sets on which the M PSFCHs are located into two groups of RB sets, where a first group of RB sets include the RB set-1, and a second group of RB sets include the RB set-3, the RB set-4, and the RB set-5. The first group of RB sets include two PSFCHs: the PSFCH with the priority value of 1 and the PSFCH with the priority value of 2. The second group of RB sets include three PSFCHs: the PSFCH with the priority value of 3, the PSFCH with the priority value of 6, and the PSFCH with the priority value of 4. The two groups of RB sets include only one second candidate group (namely, the second group of RB sets), and the second candidate group is the second group of RB sets. The terminal device may select the second group of RB sets as the N RB sets.

Refer to FIG. 7B. When five PSFCHs are distributed in the distribution manner c1, the terminal device divides the RB sets on which the M PSFCHs are located into two groups of RB sets, where a first group of RB sets include the RB set-1 and the RB set-2, and a second group of RB sets include the RB set-4 and the RB set-5. The first group of RB sets include three PSFCHs: the PSFCH with the priority value of 1, the PSFCH with the priority value of 2, and the PSFCH with the priority value of 3. The second group of RB sets include two PSFCHs: the PSFCH with the priority value of 4 and the PSFCH with the priority value of 6. The two groups of RB sets include only one second candidate group (namely, the first group of RB sets). The terminal device may select the first group of RB sets as the N RB sets.

If the plurality of groups of RB sets include a plurality of second candidate groups, the terminal device may select one second candidate group from the plurality of second candidate groups as the N RB sets.

This embodiment of this application provides two manners of selecting one second candidate group from the plurality of second candidate groups as the N RB sets. The following separately describes the manners.

Selection manner ①. The terminal device selects, from the plurality of second candidate groups, a second candidate group on which a PSFCH with a smallest priority value is located as the N RB sets. Herein, a comparison range of the smallest priority value is priority values of all PSFCHs on the plurality of second candidate groups.

The terminal device determines the priority values of the PSFCHs on the second candidate groups, and RB sets included in the second candidate group on which the PSFCH with the smallest priority value is located are the N RB sets.

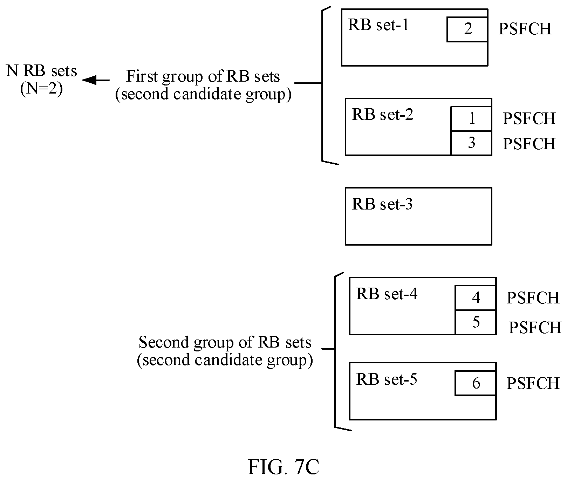

The following describes a manner in which the terminal device selects the N RB sets with reference to a specific example. Distribution manners of M PSFCHs shown in FIG. 7C are used as an example, where M is 6. The six PSFCHs are distributed on an RB set-1, an RB set-2, an RB set-4, and an RB set-5, where a PSFCH with a priority value of 2 is on the RB set-1, a PSFCH with a priority value of 1 and a PSFCH with a priority value of 3 are on the RB set-2, a PSFCH with a priority value of 4 and a PSFCH with a priority value of 5 are om the RB set-4, and a PSFCH with a priority value of 6 is on the RB set-5.

The terminal device divides the RB sets on which the M PSFCHs are located into two groups of RB sets, where a first group of RB sets include the RB set-1 and the RB set-2, and a second group of RB sets include the RB set-4 and the RB set-5. Both the first group of RB sets and the second group of RB sets are second candidate groups. The terminal device needs to further compare priority values of PSFCHs on the first group of RB sets and priority values of PSFCHs on the second group of RB sets. The first group of RB sets include three PSFCHs: the PSFCH with the priority value of 1, the PSFCH with the priority value of 2, and the PSFCH with the priority value of 3. The second group of RB sets include three PSFCHs: the PSFCH with the priority value of 4, the PSFCH with the priority value of 5, and the PSFCH with the priority value of 6. The terminal device may select the first group of RB sets as the N RB sets.

Selection manner ②. The terminal device selects, from the plurality of second candidate groups, a second candidate group with a largest quantity of RB sets as the N RB sets.

The terminal device compares quantities of RB sets in the second candidate groups, and the RB sets included in the second candidate group with the largest quantity of RB sets are the N RB sets.

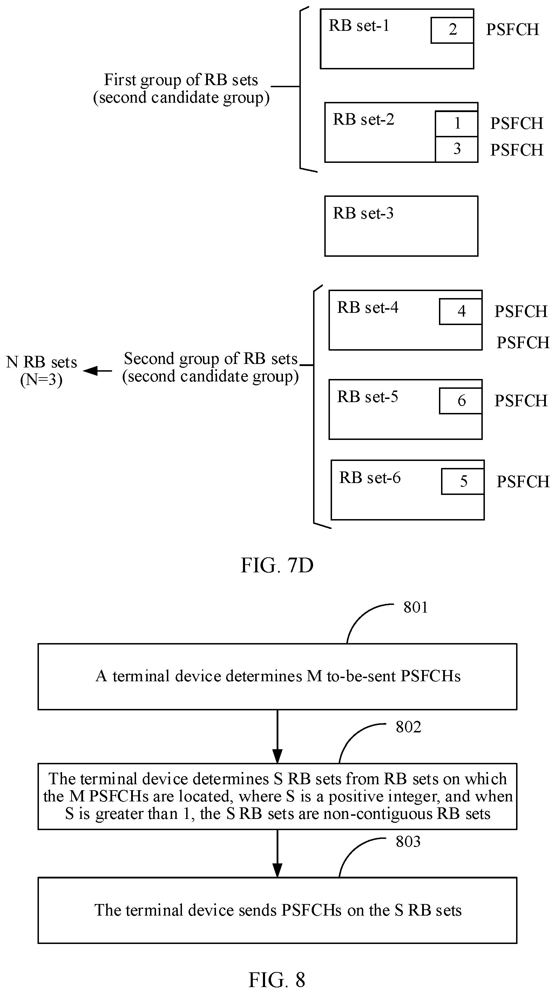

The following describes a manner in which the terminal device selects the N RB sets with reference to a specific example. Distribution manners of M PSFCHs shown in FIG. 7D are still used as an example, where M is 6. The six PSFCHs are distributed on an RB set-1, an RB set-2, an RB set-4, an RB set-5, and an RB set-6, where a PSFCH with a priority value of 2 is on the RB set-1, a PSFCH with a priority value of 1 and a PSFCH with a priority value of 3 are on the RB set-2, a PSFCH with a priority value of 4 is on the RB set-4, a PSFCH with a priority value of 6 is on the RB set-5, and a PSFCH with a priority value of 5 is on the RB set-6.

The terminal device divides the RB sets on which the M PSFCHs are located into two groups of RB sets, where a first group of RB sets include the RB set-1 and the RB set-2, and a second group of RB sets include the RB set-4, the RB set-5, and the RB set-6. The first group of RB sets include three PSFCHs: the PSFCH with the priority value of 1, the PSFCH with the priority value of 2, and the PSFCH with the priority value of 3. The second group of RB sets include three PSFCHs: the PSFCH with the priority value of 4, the PSFCH with the priority value of 5, and the PSFCH with the priority value of 6. Both the first group of RB sets and the second group of RB sets are second candidate groups. The terminal device needs to further compare a quantity of RB sets in the first group of RB sets and a quantity of RB sets in the second group of RB sets, and the terminal device may select the second group of RB sets as the N RB sets.

Selection manner ③. The terminal device selects, from the plurality of second candidate groups, a second candidate group on which an RB set with a largest quantity of PSFCHs is located as the N RB sets.

The terminal device compares a quantity of PSFCHs on each RB set in each second candidate group, and determines an RB set with a largest quantity of PSFCHs. The second candidate group on which the RB set with the largest quantity of PSFCHs is located is the N RB sets.

Selection manner ④. The terminal device randomly selects one second candidate group or randomly selects one second candidate group from the plurality of second candidate groups as the N RB sets.

Through step 701 and step 702, the terminal device determines the N RB sets, and the terminal device may send PSFCHs on the N RB sets, that is, perform step 703.

**Step 703: The terminal device sends the PSFCHs on the N RB sets. When the terminal device sends the PSFCHs on the N RB sets, the terminal device may send all of the PSFCHs on the N RB sets, or may send a part of the PSFCHs on the N RB sets.**

When performing step 703, the terminal device may select P PSFCHs from the PSFCHs on the N RB sets, where the P PSFCHs are first P PSFCHs in the PSFCHs that are on the N RB sets and that are sorted in ascending order of priority values.

The terminal device sorts the PSFCHs on the N RB sets in ascending order of priority values, and selects the first P PSFCHs from the sorted PSFCHs. The P PSFCHs need to satisfy a limitation on a maximum PSFCH transmit quantity of the terminal device and maximum PSFCH transmit power of the terminal device. To be specific, P is not greater than the maximum PSFCH transmit quantity of the terminal device, and total power of the P PSFCHs is not greater than the maximum PSFCH transmit power of the terminal device.

After the terminal device selects the P PSFCHs from the PSFCHs on the N RB sets, the terminal device sends the P PSFCHs.

Similarly, an execution occasion of the embodiment shown in FIG. 6A is also not limited in this embodiment of this application. For example, after performing LBT, the terminal device may perform the embodiment shown in FIG. 6A on RB sets on which the M PSFCHs are located and on which LBT is successfully performed. For another example, when performing the embodiment shown in FIG. 6A, after determining the N RB sets, the terminal device performs LBT on the determined N RB sets, and then sends PSFCHs on an RB set on which LBT is successfully performed in the N RB sets. However, in this manner, there is a case in which the RB set on which LBT is successfully performed in the N RB sets is not contiguous RB sets. In this case, a solution provided for the terminal device is similar to the solution provided in a similar case in which LBT is performed on the determined N RB sets after the embodiment shown in FIG. 4A is performed. For details, refer to the foregoing descriptions. Details are not described herein again.

In the embodiment shown in FIG. 7A, the terminal device groups the RB sets on which the M PSFCHs are located, uses the group of RB sets with the largest quantity of PSFCHs as the N RB sets, and sends the PSFCHs on the N RB sets. In this manner, the N RB sets determined by the terminal device include a large quantity of PSFCHs, so as to ensure that the terminal device can transmit as many PSFCHs as possible in a process of transmitting PSFCHs, and a PSFCH transmission process satisfies a capability of the terminal device for transmitting PSFCHs on contiguous frequency domain resources and/or non-contiguous frequency domain resources.

(2) Case 2: The terminal device can transmit PSFCHs on non-contiguous RB sets, and cannot transmit PSFCHs on contiguous RB sets.

FIG. 8 shows a sidelink communication method according to an embodiment of this application. The method includes the following steps.

**Step 801: A terminal device determines M to-be-sent PSFCHs. A manner in which the terminal device performs step 801 is similar to the manner in which the terminal device performs step 301. For details, refer to the foregoing descriptions. Details are not described herein again.**

**Step 802: The terminal device determines S RB sets from RB sets on which the M to-be-sent PSFCHs are located, where S is a positive integer, and when S is greater than 1, the S RB sets are non-contiguous RB sets.**

Step 802 may be understood as that the terminal device determines J PSFCHs from the M to-be-sent PSFCHs. The J PSFCHs are located on the S RB sets. S is a positive integer, and when S is greater than 1, the S RB sets are non-contiguous RB sets.

**Step 803: The terminal device sends PSFCHs on the S RB sets.**

The M PSFCHs that need to be sent and that are determined by the terminal device are the M to-be-sent PSFCHs. However, due to impact of a capability of the terminal device for transmitting PSFCHs on contiguous frequency domain resources and/or non-contiguous frequency domain resources (optionally, the terminal device may be further limited by a maximum PSFCH transmit quantity of the terminal device or maximum PSFCH transmit power of the terminal device), PSFCHs finally sent by the terminal device may be the M PSFCHs, or may be a part of the M PSFCHs. To determine the PSFCHs that can be finally sent, the terminal device performs step 802 and step 803.

The M PSFCHs may be distributed on a same RB set, or may be distributed on a plurality of RB sets. The terminal device first determines the S RB sets through step 802. Because the terminal device can send PSFCHs only on non-contiguous RB sets, the S RB sets determined by the terminal device are one RB set or a plurality of non-contiguous RB sets.

After determining the S RB sets, the terminal device sends the PSFCHs on the S RB sets. The terminal device may send all of the to-be-sent PSFCHs on the S RB sets, or may send a part of the to-be-sent PSFCHs on the S RB sets.

In the embodiment shown in FIG. 8, to clarify a process in which the terminal device sends the PSFCHs, sending of the PSFCHs by the terminal device is divided into two steps. In a first step, the S RB sets are first determined, and in a second step, the PSFCHs are sent on the S RB sets. Actually, when sending the PSFCHs, the terminal device may determine, from the RB sets on which the M PSFCHs are located, J PSFCHs on one RB set or a plurality of non-contiguous RB sets (that is, the S RB sets), and then send the determined PSFCHs. Therefore, in this embodiment of this application, the step of determining the S RB sets may be understood as determining the J PSFCHs from the M PSFCHs.

An execution occasion of the embodiment shown in FIG. 8 is not limited in this embodiment of this application. For example, after performing LBT, the terminal device may perform the embodiment shown in FIG. 8 on RB sets on which the M PSFCHs are located and on which LBT is successfully performed. For another example, when performing the embodiment shown in FIG. 8, after determining the N RB sets, the terminal device performs LBT on the determined N RB sets, and then sends PSFCHs on an RB set on which LBT is successfully performed in the N RB sets.

According to the sidelink communication method shown in FIG. 8, the S RB sets determined by the terminal device are one RB set or a plurality of non-contiguous RB sets, which satisfies the capability of the terminal device for transmitting PSFCHs on contiguous frequency domain resources and/or non-contiguous frequency domain resources, thereby ensuring that the terminal device efficiently transmits the PSFCHs.

In this embodiment of this application, the terminal device may implement the sidelink communication method shown in FIG. 8 in any one of the following manners. The manners described below are execution manners of step 802 and step 803 in the sidelink communication method shown in FIG. 8.

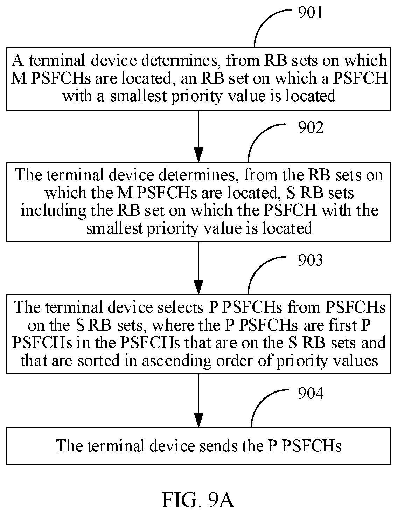

**Manner (1).** FIG. 9A shows a sidelink communication method according to an embodiment of this application. The method includes the following steps.

**Step 901: A terminal device determines, from RB sets on which M PSFCHs are located, an RB set on which a PSFCH with a smallest priority value is located. To be specific, the terminal device sends PSFCHs according to a principle that a PSFCH with a small priority value is preferentially sent and RB sets on which the sent PSFCHs are located are non-contiguous.**

In other words, the terminal device determines the PSFCH with the smallest priority value from the M PSFCHs.

**Step 902: The terminal device determines, from the RB sets on which the M PSFCHs are located, S RB sets including the RB set on which the PSFCH with the smallest priority value is located.**

In other words, the terminal device determines, from the M PSFCHs, the S RB sets including the PSFCH with the smallest priority value.

After determining the RB set on which the PSFCH with the smallest priority value is located, the terminal device determines whether the RB sets on which the M PSFCHs are located include an RB set non-contiguous to the RB set on which the PSFCH with the smallest priority value is located.

If the RB sets on which the M PSFCHs are located do not include an RB set non-contiguous to the RB set on which the PSFCH with the smallest priority value is located, S is equal to 1, and the RB set determined by the terminal device is the RB set on which the PSFCH with the smallest priority value is located.

If the RB sets on which the M PSFCHs are located include an RB set non-contiguous to the RB set on which the PSFCH with the smallest priority value is located, S is greater than 1, the terminal device determines S non-contiguous RB sets, and the S RB sets include the RB set on which the PSFCH with the smallest priority value is located and the RB set non-contiguous to the RB set on which the PSFCH with the smallest priority value is located. If the RB sets on which the M PSFCHs are located include an RB set that is non-contiguous to the RB set non-contiguous to the RB set on which the PSFCH with the smallest priority value is located, the S RB sets further include the RB set that is non-contiguous to the RB set non-contiguous to the RB set on which the PSFCH with the smallest priority value is located. In other words, the S RB sets are S disconnected RB sets, and include the RB set on which the PSFCH with the smallest priority value is located.

For ease of description, the RB set on which the PSFCH with the smallest priority value is located is marked as an RB set-A, an RB set non-contiguous to the RB set-A is marked as an RB set-B2, an RB set non-contiguous to the RB set-B2 is marked as an RB set-C2, and the rest is deduced by analogy. There may be more than one RB set-B2. There may also be more than one RB set-C2.

When the RB sets on which the M PSFCHs are located include the RB set-B2 non-contiguous to the RB set-A, the S non-contiguous RB sets determined by the terminal device include the RB set-A and the RB set-B2. If the RB sets on which the M PSFCHs are located further include the RB set-C2 non-contiguous to the RB set-B2, the S RB sets further include the RB set-C2. The finally determined S RB sets need to satisfy the following condition: An RB set in the RB sets on which the M PSFCHs are located other than the S RB sets is contiguous to at least one RB set in the S RB sets.

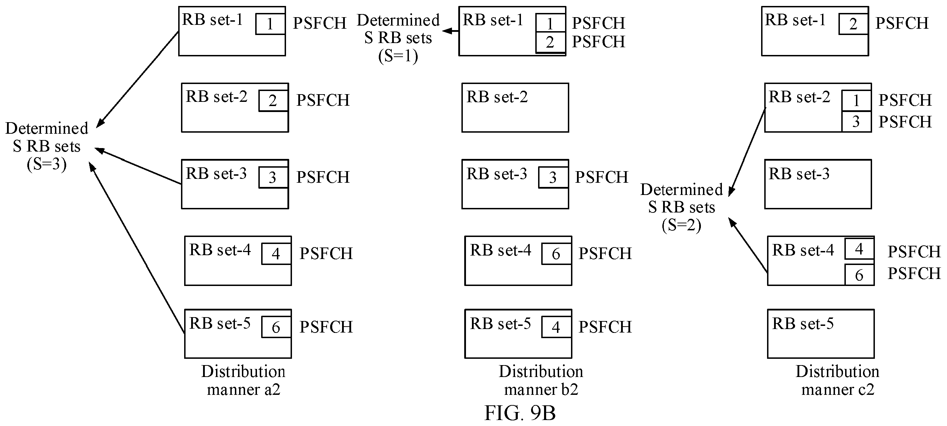

The following describes a manner in which the terminal device determines the S RB sets with reference to a specific example. FIG. 9B is a diagram of distribution of M PSFCHs according to an embodiment of this application. In FIG. 9B, M is 5, and three types of possible distribution of the M PSFCHs are shown as an example. In FIG. 9B, the three distribution manners are respectively marked as a distribution manner a2, a distribution manner b2, and a distribution manner c2.

In the distribution manner a2 shown in FIG. 9B, the five PSFCHs are distributed on an RB set-1, an RB set-2, an RB set-3, an RB set-4, and an RB set-5, where a PSFCH with a priority value of 1 is on the RB set-1, a PSFCH with a priority value of 2 is on the RB set-2, a PSFCH with a priority value of 3 is on the RB set-3, a PSFCH with a priority value of 4 is on the RB set-4, and a PSFCH with a priority value of 6 is on the RB set-5.

When the five PSFCHs are distributed in the distribution manner a2, the terminal device first determines an RB set on which a PSFCH with a smallest priority value is located, that is, determines the RB set-1 on which the PSFCH with the priority value of 1 is located. Because the RB sets on which the five PSFCHs are located include the RB set-3 non-contiguous to the RB set-1, and in addition, further include an RB set that is non-contiguous to the RB set non-contiguous to the RB set on which the PSFCH with the smallest priority value is located, that is, the RB sets on which the five PSFCHs are located include the RB set-5 non-contiguous to the RB set-3. In this case, the terminal device determines three non-contiguous RB sets (that is, S is, S is equal to 3), and the three RB sets are respectively the RB set-1, the RB set-3, and the RB set-5.

In the distribution manner b2 shown in FIG. 9B, the five PSFCHs are distributed on the RB set-1 and the RB set-2, where the PSFCH with the priority value of 1 and the PSFCH with the priority value of 2 are on the RB set-1, the PSFCH with the priority value of 3 is on the RB set-3, the PSFCH with the priority value of 4 is on the RB set-5, and the PSFCH with the priority value of 6 is on the RB set-4.

When the five PSFCHs are distributed in the distribution manner b2, the terminal device first determines an RB set on which a PSFCH with a smallest priority value is located, that is, determines the RB set-1 on which the PSFCH with the priority value of 1 is located. Because the RB sets on which the five PSFCHs are located do not include an RB set non-contiguous to the RB set-1, the terminal device determines one RB set (that is, S is equal to 1), and the RB set is the RB set-1.

In the distribution manner c2 shown in FIG. 9B, the five PSFCHs are distributed on the RB set-1, the RB set-2, and the RB set-4, where the PSFCH with the priority value of 2 is on the RB set-1, the PSFCH with the priority value of 1 and the PSFCH with the priority value of 3 are on the RB set-2, and the PSFCH with the priority value of 4 and the PSFCH with the priority value of 6 are on the RB set-4.

When the five PSFCHs are distributed in the distribution manner c2, the terminal device first determines an RB set on which a PSFCH with a smallest priority value is located, that is, determines the RB set-2 on which the PSFCH with the priority value of 1 is located. Because the RB sets on which the five PSFCHs are located include the RB set-4 non-contiguous to the RB set-1, and in addition, do not include an RB set that is non-contiguous to the RB set non-contiguous to the RB set on which the PSFCH with the smallest priority value is located, the terminal device determines two non-contiguous RB sets (that is, S is equal to 2), and the two RB sets are respectively the RB set-2 and the RB set-4.

It can be learned from the foregoing example that when the terminal device determines that the RB sets on which the M PSFCHs are located include an RB set non-contiguous to the RB set on which the PSFCH with the smallest priority value is located, the S RB sets determined by the terminal device are a plurality of non-contiguous RB sets that include the RB set on which the PSFCH with the smallest priority value is located.

The terminal device ensures, through step 902, that the S RB sets always include the RB set on which the PSFCH with the smallest priority value is located. To be specific, PSFCHs on the S RB sets are determined from PSFCHs included in the RB sets on which the M PSFCHs are located according to a principle of preferentially sending a PSFCH with a small priority value. Through step 901 and step 902, the terminal device determines the S RB sets from the RB sets on which the M PSFCHs are located. Optionally, the principle of preferentially sending a PSFCH with a small priority value may alternatively be replaced with a principle of preferentially sending PSFCHs included on an RB set with a largest quantity of PSFCHs. Then, the terminal device further determines finally sent PSFCHs from the S RB sets, that is, performs step 903.

**Step 903: The terminal device selects P PSFCHs from the PSFCHs on the S RB sets, where the P PSFCHs are first P PSFCHs in the PSFCHs that are on the S RB sets and that are sorted in ascending order of priority values.**

The terminal device sorts the PSFCHs on the S RB sets in ascending order of priority values, and selects the first P PSFCHs from the sorted PSFCHs. In other words, the terminal device preferentially sends a high-priority PSFCH (a PSFCH with a low priority value) in the PSFCHs on the S RB sets, and the P PSFCHs need to satisfy a maximum PSFCH transmit quantity of the terminal device and/or maximum PSFCH transmit power of the terminal device. To be specific, P is not greater than the maximum PSFCH transmit quantity of the terminal device, and total power of the P PSFCHs is not greater than the maximum PSFCH transmit power of the terminal device.

The following describes a manner in which the terminal device selects the P PSFCHs with reference to a specific example. The distribution manners of the M PSFCHs shown in FIG. 9B are still used as an example.

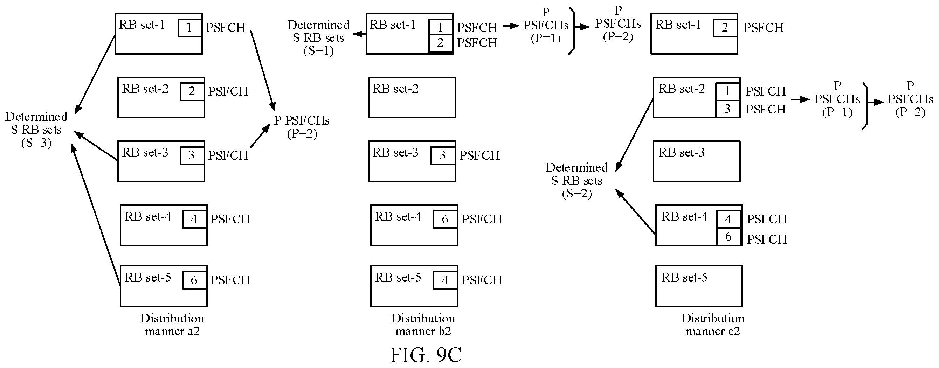

Refer to FIG. 9C. It is assumed that the maximum PSFCH transmit quantity of the terminal device is 2. When five PSFCHs are distributed in the distribution manner a2, after the terminal device determines the RB set-1, the RB set-3, and the RB set-5, the terminal device selects two PSFCHs in ascending order of priority values from the three PSFCHs on the RB set-1, the RB set-2, and the RB set-3, that is, selects the PSFCH with the priority value of 1 and the PSFCH with the priority value of 3. If total power of the two PSFCHs is not greater than the maximum transmit power of the terminal device, the two PSFCHs are the finally selected PSFCHs (that is, P is equal to 2). If the total power of the two PSFCHs is greater than the maximum transmit power of the terminal device, and total power of the PSFCH with the priority value of 1 is not greater than the maximum transmit power of the terminal device, the terminal device selects the PSFCH with the priority value of 1 (that is, P is equal to 1).

Refer to FIG. 9C. It is assumed that the maximum PSFCH transmit quantity of the terminal device is 2. When five PSFCHs are distributed in the distribution manner b2, after the terminal device determines the RB set-1, the terminal device selects two PSFCHs in ascending order of priority values from the two PSFCHs on the RB set-1, that is, selects the PSFCH with the priority value of 1 and the PSFCH with the priority value of 2. If total power of the two PSFCHs is not greater than maximum transmit power of the terminal device, the two PSFCHs are the finally selected PSFCHs (that is, P is equal to 2). If the total power of the two PSFCHs is greater than the maximum transmit power of the terminal device, and total power of the PSFCH with the priority value of 1 is not greater than the maximum transmit power of the terminal device, the terminal device selects the PSFCH with the priority value of 1 (that is, P is equal to 1).

Refer to FIG. 9C. It is assumed that the maximum PSFCH transmit quantity of the terminal device is 2. When five PSFCHs are distributed in the distribution manner c2, after the terminal device determines the RB set-2 and the RB set-4, the terminal device selects two PSFCHs in ascending order of priority values from the four PSFCHs on the RB set-2 and the RB set-4, that is, selects the PSFCH with the priority value of 1 and the PSFCH with the priority value of 3. If total power of the two PSFCHs is not greater than maximum transmit power of the terminal device, the two PSFCHs are the finally selected PSFCHs (that is, P is equal to 2). If the total power of the two PSFCHs is greater than the maximum transmit power of the terminal device, and total power of the PSFCH with the priority value of 1 is not greater than the maximum transmit power of the terminal device, the terminal device selects the PSFCH with the priority value of 1 (that is, P is equal to 1).

Through step 903, the terminal device determines the finally sent P PSFCHs from the PSFCHs on the S RB sets. Because the P PSFCHs are selected based on the priority values of the PSFCHs, it is ensured that the P PSFCHs include one or more PSFCHs with a smallest priority value in the M to-be-sent PSFCHs, and the terminal device can preferentially send a PSFCH with high importance.

**Step 904: The terminal device sends the P PSFCHs.**

In the embodiment shown in FIG. 9A, the terminal device first locates the RB set on which the PSFCH with the smallest priority value is located, then determines the S RB sets including the RB set on which the PSFCH with the smallest priority value is located, and sends the P PSFCHs on the S RB sets. In the foregoing manner, it can be ensured that the PSFCHs finally sent by the terminal device are P PSFCHs with high importance, so that an important PSFCH can be preferentially sent. In addition, the P PSFCHs are distributed on one RB set or a plurality of non-contiguous RB sets, and transmitting the P PSFCHs by the terminal device satisfies a capability of the terminal device for transmitting PSFCHs on contiguous frequency domain resources and/or non-contiguous frequency domain resources.

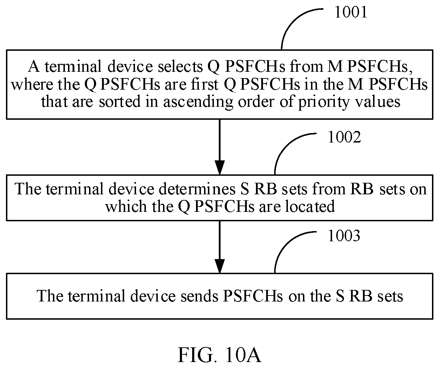

**Manner (2).** FIG. 10A shows a sidelink communication method according to an embodiment of this application. The method includes the following steps.

**Step 1001: A terminal device selects Q PSFCHs from M PSFCHs, where the Q PSFCHs are first Q PSFCHs in the M PSFCHs that are sorted in ascending order of priority values.**

In other words, the terminal device preferentially sends a PSFCH with a small priority value from the M PSFCHs.

The terminal device sorts the M PSFCHs in ascending order of priority values, and selects the first Q PSFCHs from the sorted PSFCHs. To be specific, the terminal device preferentially sends a PSFCH with a low priority value in the M PSFCHs, and a quantity of sent PSFCHs is Q. The Q PSFCHs need to satisfy a limitation on a maximum PSFCH transmit quantity of the terminal device and/or maximum PSFCH transmit power of the terminal device. To be specific, Q is not greater than the maximum PSFCH transmit quantity of the terminal device, and/or total power of the Q PSFCHs is not greater than the maximum PSFCH transmit power (P_{c,max}) of the terminal device.

The following describes a manner in which the terminal device selects the Q PSFCHs with reference to a specific example. The distribution manners of the M PSFCHs shown in FIG. 9B are still used as an example.

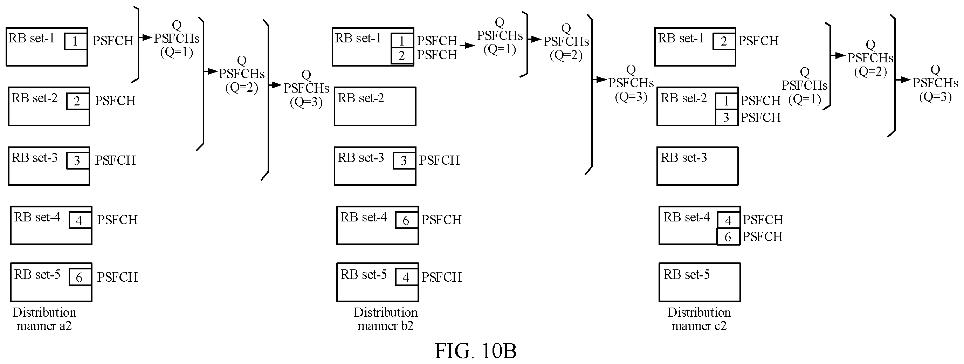

Refer to FIG. 10B. It is assumed that the maximum PSFCH transmit quantity of the terminal device is 3. When five PSFCHs are distributed in the distribution manner a2, the distribution manner b2, or the distribution manner c2, the terminal device selects three PSFCHs in ascending order of priority values from the five PSFCHs, that is, selects the PSFCH with the priority value of 1, the PSFCH with the priority value of 2, and the PSFCH with the priority value of 3. If total power of the three PSFCHs is not greater than the maximum transmit power of the terminal device, the three PSFCHs are finally selected PSFCHs (that is, Q is equal to 3). If the total power of the three PSFCHs is greater than the maximum transmit power of the terminal device, and total power of the PSFCH with the priority value of 1 and the PSFCH with the priority value of 2 is not greater than the maximum transmit power of the terminal device, the terminal device selects the PSFCH with the priority value of 1 and the PSFCH with the priority value of 2 (that is, Q is equal to 2). If the total power of the three PSFCHs is greater than the maximum transmit power of the terminal device, the total power of the PSFCH with the priority value of 1 and the PSFCH with the priority value of 2 is greater than the maximum transmit power of the terminal device, and power of the PSFCH with the priority value of 1 is not greater than the maximum transmit power of the terminal device, the terminal device selects the PSFCH with the priority value of 1 (that is, Q is equal to 1).

Through step 1001, the terminal device determines the Q PSFCHs from the M PSFCHs. Because the Q PSFCHs are selected based on the priority values of the PSFCHs, it is ensured that the Q PSFCHs include one or more PSFCHs ranked top in the M to-be-sent PSFCHs that are sorted based on the priority values.

This step and the following step 1002 are performed simultaneously. In this case, step 1001 may alternatively be an optional step. To be specific, the terminal device determines J PSFCHs from the M PSFCHs, where the J PSFCHs are located on S RB sets. When determining the J PSFCHs from the M PSFCHs, the terminal device first preferentially sends a PSFCH with a small priority value in the M PSFCHs, and then sends PSFCHs on non-contiguous RB sets. The descriptions herein are not a time sequence of the two sending actions, but are a limitation on two features of the sending actions.

**Step 1002: The terminal device determines the S RB sets from RB sets on which the Q PSFCHs are located. Step 1002 may also be understood as that the terminal device determines PSFCHs on the S RB sets. The following uses only an example in which the terminal device determines the S RB sets for description. Actually, in a process of determining the S RB sets, the terminal device essentially determines, from the Q PSFCHs, PSFCHs on one RB set or a plurality of non-contiguous RB sets (for example, J PSFCHs on one RB set or a plurality of non-contiguous RB sets), where the RB set or the plurality of non-contiguous RB sets are the S RB sets.**

The Q PSFCHs may be distributed on a same RB set, or may be distributed on a plurality of RB sets. The terminal device selects, through step 1002 from the RB sets on which the Q PSFCHs are located, one RB set or a plurality of non-contiguous RB sets as the S RB sets.

There are a plurality of manners in which the terminal device determines the S RB sets from the RB sets on which the Q PSFCHs are located. A specific manner used by the terminal device to determine the S RB sets from the RB sets on which the Q PSFCHs are located is not limited in this embodiment of this application. The following lists two possible manners for determining the S RB sets.

Determination manner 1. The terminal device determines, based on priority values of the Q PSFCHs, the S RB sets from the RB sets on which the Q PSFCHs are located. When S is equal to 1, the determined RB set is an RB set on which a PSFCH with a smallest priority value in the Q PSFCHs is located. When S is greater than 1, the determined S RB sets are a plurality of non-contiguous RB sets including an RB set on which a PSFCH with a smallest priority value in the Q PSFCHs is located. In other words, when S is equal to 1, the determined RB set is an RB set on which a PSFCH with a smallest priority value in the M PSFCHs is located. When S is greater than 1, the determined S RB sets are a plurality of non-contiguous RB sets including an RB set on which a PSFCH with a smallest priority value in the M PSFCHs is located. In this case, the PSFCH with the smallest priority value in the M PSFCHs and the PSFCH with the smallest priority value in the Q PSFCHs may be a same PSFCH. In other words, when S is equal to 1, the determined RB set includes the PSFCH with the smallest priority value in the M (or Q) PSFCHs. When S is greater than 1, the determined S RB sets include the PSFCH with the smallest priority value in the M (or Q) PSFCHs; and the S RB sets are a plurality of non-contiguous RB sets.

To be specific, the terminal device preferentially sends a PSFCH with a small priority value, and an RB set on which the sent PSFCH is located is non-adjacent RB sets or one RB set (or non-contiguous RB sets). When there is one RB set, there is no PSFCH on an RB set adjacent to the RB set, or the terminal device can send PSFCHs only on the RB set due to a limitation of the maximum PSFCH transmit quantity of the terminal device and/or the maximum PSFCH transmit power of the terminal device.

In this determination manner, after preferentially determining the RB set on which the PSFCH with the smallest priority value in the Q PSFCHs is located, the terminal device determines whether the RB sets on which the Q PSFCHs are located include an RB set non-contiguous to the RB set on which the PSFCH with the smallest priority value is located.

If the RB sets on which the Q PSFCHs are located do not include an RB set non-contiguous to the RB set on which the PSFCH with the smallest priority value is located, S is equal to 1, and the RB set determined by the terminal device is the RB set on which the PSFCH with the smallest priority value is located.

If the RB sets on which the Q PSFCHs are located include an RB set non-contiguous to the RB set on which the PSFCH with the smallest priority value is located, S is greater than 1, the terminal device determines S non-contiguous RB sets, and the S RB sets include the RB set on which the PSFCH with the smallest priority value is located and the RB set non-contiguous to the RB set on which the PSFCH with the smallest priority value is located (the RB set non-contiguous to the RB set on which the PSFCH with the smallest priority value is located is marked as a second RB set-B2). If the RB sets on which the Q PSFCHs are located include an RB set that is non-contiguous to the RB set non-contiguous to the RB set on which the PSFCH with the smallest priority value is located (that is, include an RB set non-contiguous to the RB set-B2, where the RB set is marked as an RB set-C2), the S RB sets further include the RB set that is non-contiguous to the RB set non-contiguous to the RB set on which the PSFCH with the smallest priority value is located (that is, the S RB sets further include the RB set-C2).

For ease of description, the RB set on which the PSFCH with the smallest priority value is located is referred to as a first RB set, an RB set on which a PSFCH with a smallest priority value is located is selected from the RB set that is non-contiguous to the RB set on which the PSFCH with the smallest priority value is located and that is in the RB sets on which the Q PSFCHs are located, the RB set on which the PSFCH with the smallest priority value is located in the RB set that is non-contiguous to the RB set on which the PSFCH with the smallest priority value is located is referred to as a second RB set, and in addition to the first RB set, the S RB sets further include the second RB set. If the RB sets on which the Q PSFCHs are located (other than the first RB set and the second RB set) include an RB set non-contiguous to the second RB set, an RB set on which a PSFCH with a smallest priority value is located is selected from the RB set that is non-contiguous to the second RB set and that is in the RB sets on which the Q PSFCHs are located, the RB set on which the PSFCH with the smallest priority value is located in the RB set that is non-contiguous to the RB second RB set and that is in the RB sets on which the Q PSFCHs are located is referred to as a third RB set, and in addition to the first RB set and the second RB set, the S RB sets further include the third RB set. The rest is deduced by analogy until the RB sets on which the Q PSFCHs are located (other than the determined RB sets) do not include an RB set non-contiguous to a previously determined RB set.

In other words, the S RB sets are S disconnected (non-adjacent) RB sets that include the RB set on which the PSFCH with the smallest priority value is located. The RB sets on which the Q PSFCHs are located include a plurality of groups of RB sets, and each group of RB sets include one RB set or a plurality of non-contiguous RB sets. The terminal device selects a group of RB sets on which the PSFCH with the smallest priority value is located as the N RB sets.

The following describes a manner in which the terminal device determines the S RB sets with reference to a specific example. The distribution manners of the M PSFCHs shown in FIG. 9B are still used as an example.

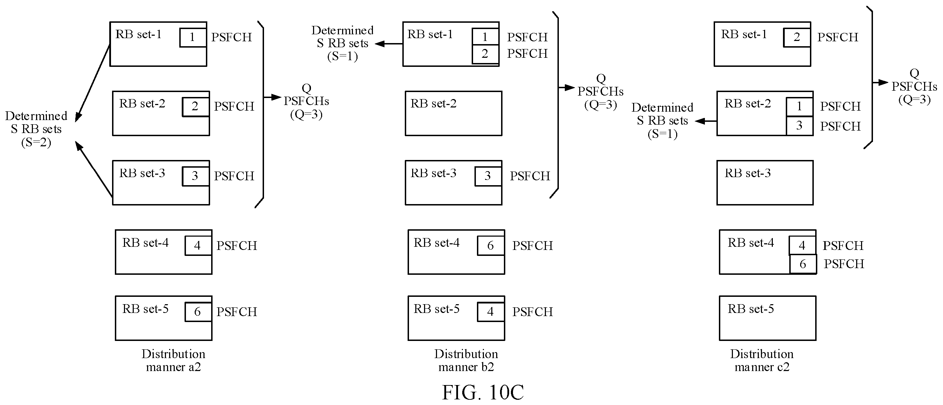

Refer to FIG. 10C. It is assumed that the Q PSFCHs selected by the terminal device are respectively the PSFCH with the priority value of 1, the PSFCH with the priority value of 2, and the PSFCH with the priority value of 3.

When five PSFCHs are distributed in the distribution manner a2, the terminal device determines an RB set on which a PSFCH with a smallest priority value is located, that is, determines the RB set-1 on which the PSFCH with the priority value of 1 is located. Because the RB sets on which the three PSFCHs are located include the RB set-3 non-contiguous to the RB set-1, the terminal device determines two non-contiguous RB sets (that is, S is equal to 2), and the two RB sets are respectively the RB set-1 and the RB set-3.

When five PSFCHs are distributed in the distribution manner b2, the terminal device determines an RB set on which a PSFCH with a smallest priority value is located, that is, determines the RB set-1 on which the PSFCH with the priority value of 1 is located. Because the RB sets on which the three PSFCHs are the RB set-1 and the RB set-3, the terminal device determines one RB set (that is, S is equal to 1), and the RB set is the RB set-1.

When five PSFCHs are distributed in the distribution manner c2, the terminal device determines an RB set on which a PSFCH with a smallest priority value is located, that is, determines the RB set-2 on which the PSFCH with the priority value of 1 is located. Because the RB sets on which the three PSFCHs are located do not include an RB set non-contiguous to the RB set-2, the terminal device determines one RB set (that is, S is equal to 1), and the RB set is the RB set-1.

When there is more than one PSFCH with the smallest priority value in the M PSFCHs, the S RB sets determined by the terminal device are a group of RB sets including an RB set on which the PSFCH with the smallest priority value in the M PSFCHs is located (the group of RB sets include one RB set or a plurality of non-contiguous RB sets), and the group of RB sets in which the RB set is located include a largest quantity of non-contiguous RB sets. Alternatively, the S RB sets determined by the terminal device are a group of non-contiguous RB sets including an RB set on which the PSFCH with the smallest priority value in the M PSFCHs is located, and the group of RB sets include a largest quantity of PSFCHs. Alternatively, the S RB sets determined by the terminal device are a group of RB sets including an RB set with a largest quantity of PSFCHs in the M PSFCHs is located and an RB set on which the PSFCH with the smallest priority value is located. Alternatively, the terminal device randomly selects one group of RB sets or randomly selects one group of RB sets from the plurality of groups of RB sets. Each group of RB sets in the plurality of groups of RB sets include the PSFCH with the smallest priority value in the M PSFCHs (include an RB set on which the PSFCH with the smallest priority value in the M PSFCHs is located).

Determination manner 2. The terminal device may divide the RB sets on which the Q PSFCHs are located into a plurality of groups of RB sets, and each group of RB sets include one RB set or a plurality of non-contiguous RB sets. The terminal device selects a group of RB sets with a largest quantity of PSFCHs as the S RB sets.

The following describes a manner in which the terminal device determines the S RB sets with reference to a specific example. The distribution manners of the M PSFCHs shown in FIG. 9B are still used as an example.

It is assumed that the Q PSFCHs selected by the terminal device are respectively the PSFCH with the priority value of 1, the PSFCH with the priority value of 2, and the PSFCH with the priority value of 3.

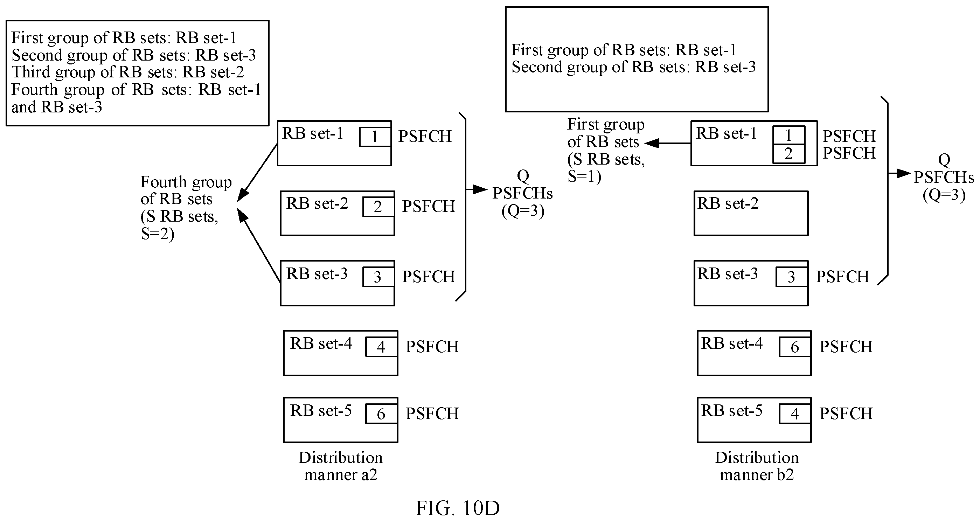

Refer to FIG. 10D. When five PSFCHs are distributed in the manner a2, because the RB sets on which the Q PSFCHs are located are respectively the RB set-1, the RB set-2, and the RB set-3, the RB set-1, the RB set-2, and the RB set-3 can be divided into four groups of RB sets, where a first group of RB sets include the RB set-1, a second group of RB sets include the RB set-3, a third group of RB sets include the RB set-2, and a fourth group of RB sets include the RB set-1 and the RB set-3. The first group of RB sets, the second group of RB sets, and the third group of RB sets each include one PSFCH, and only the fourth group of RB sets include two PSFCHs. In this case, the terminal device uses the fourth group of RB sets as the S RB sets (S is equal to 2).

Refer to FIG. 10D. When five PSFCHs are distributed in the distribution manner b2, the RB sets on which the Q PSFCHs are located may be divided into two groups of RB sets, where a first group of RB sets include the RB set-1, and a second group of RB sets include the RB set-2. A quantity (3) of PSFCHs on the RB set-1 is greater than a quantity (2) of PSFCHs on the RB set-2, the terminal device may determine that the S RB sets are the RB set-1 (S is equal to 1).

It is assumed that the Q PSFCHs selected by the terminal device are respectively the PSFCH with the priority value of 1, the PSFCH with the priority value of 2, the PSFCH with the priority value of 3, and the PSFCH with the priority value of 4.

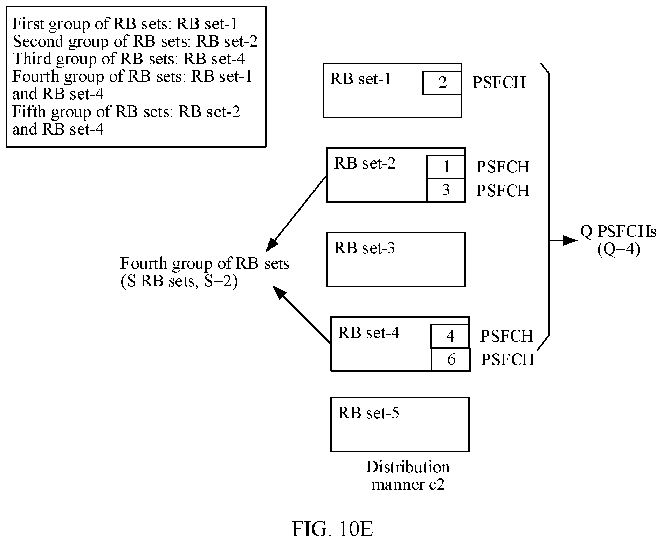

Refer to FIG. 10E. The distribution manner c2 shown in FIG. 9B is used as an example. The RB sets on which the five PSFCHs are located may be divided into five groups of RB sets, where a first group of RB sets include the RB set-1, a second group of RB sets include the RB set-2, a third group of RB sets include the RB set-4, a fourth group of RB sets include the RB set-1 and the RB set-4, and a fifth group of RB sets include the RB set-2 and the RB set-4. The fourth group of RB sets include a largest quantity of PSFCHs (including three PSFCHs). In this case, the terminal device may use RB sets included in the fourth group of RB sets as the S RB sets (S is equal to 2).

It should be noted that, if the plurality of groups of RB sets formed by dividing the RB sets on which the Q PSFCHs are located include a plurality of groups of RB sets including a largest quantity of PSFCHs, that is, the plurality of groups of RB sets include at least two groups of RB sets, quantities of PSFCHs on the at least two groups of RB sets are the same, and the quantity of PSFCHs is the largest. The terminal device may further select, from the at least two groups of RB sets, a group of RB sets on which a PSFCH with a smallest priority value is located as the S RB sets; select, from the at least two groups of RB sets, a group of RB sets with a largest quantity of RB sets as the S RB sets; or select a group of RB sets in which an RB set with a largest quantity of PSFCHs is located as the S RB sets. Alternatively, the terminal device randomly selects one group of RB sets or randomly selects one group of RB sets from the at least two groups of RB sets.

Determination manner 3. The RB sets on which the Q PSFCHs are located may be divided into a plurality of groups of RB sets, and each group of RB sets include one RB set or a plurality of non-contiguous RB sets. The terminal device selects a group of RB sets with a largest quantity of RB sets as the S RB sets.

It should be noted that, if the plurality of groups of RB sets formed by dividing the RB sets on which the Q PSFCHs are located include a plurality of groups of RB sets including a largest quantity of RB sets, that is, the plurality of groups of RB sets include at least two groups of RB sets, quantities of RB sets in the at least two groups of RB sets are the same, and the quantity of RB sets is the largest. The terminal device may further select, from the at least two groups of RB sets, a group of RB sets on which a PSFCH with a smallest priority value is located as the S RB sets; select, from the at least two groups of RB sets, a group of RB sets with a largest quantity of PSFCHs as the S RB sets; or select, from the at least two groups of RB sets, a group of RB sets in which an RB set with a largest quantity of PSFCHs is located as the S RB sets. Alternatively, the terminal device randomly selects one group of RB sets or randomly selects one group of RB sets from the at least two groups of RB sets as the S RB sets.

Determination manner 4. The terminal device determines the S RB sets from the RB sets on which the Q PSFCHs are located. When S is equal to 1, the determined RB set is an RB set with a largest quantity of PSFCHs in the Q PSFCHs. When S is greater than 1, the determined S RB sets are a plurality of non-contiguous RB sets including an RB set with a largest quantity of PSFCHs.

It should be noted that when there is more than one RB set including a largest quantity of PSFCHs in the M PSFCHs, the S RB sets determined by the terminal device are a group of RB sets including an RB set on which a PSFCH with a smallest priority value in the M PSFCHs is located and an RB set with a largest quantity of PSFCHs (the group of RB sets include one RB set or a plurality of non-contiguous RB sets). Alternatively, the S RB sets determined by the terminal device are a group of RB sets including an RB set with a largest quantity of PSFCHs, and the group of RB sets include a largest quantity of PSFCHs. Alternatively, the S RB sets determined by the terminal device are a group of RB sets including an RB set with a largest quantity of PSFCHs, and the group of RB sets include a largest quantity of RB sets. Alternatively, the terminal device randomly selects one group of RB sets or randomly selects one group of RB sets from the plurality of groups of RB sets. Any group of RB sets in the plurality of groups of RB sets include an RB set with a largest quantity of PSFCHs.

**Step 1003: The terminal device sends PSFCHs on the S RB sets.**

In the embodiment shown in FIG. 10A, the terminal device first locates the RB sets on which the first Q PSFCHs obtained after sorting based on the priority values are located, then determines the N RB sets from the RB sets on which the Q PSFCHs are located, and sends the PSFCHs on the N RB sets. In the foregoing manner, the PSFCHs finally sent by the terminal device are a part or all of the Q PSFCHs with high importance, so that the terminal device can send an important PSFCH. In addition, the part or all of the Q PSFCHs are distributed on one RB set or a plurality of non-contiguous RB sets, and transmitting the part or all of the Q PSFCHs by the terminal device satisfies a capability of the terminal device for transmitting PSFCHs on contiguous frequency domain resources and/or non-contiguous frequency domain resources.

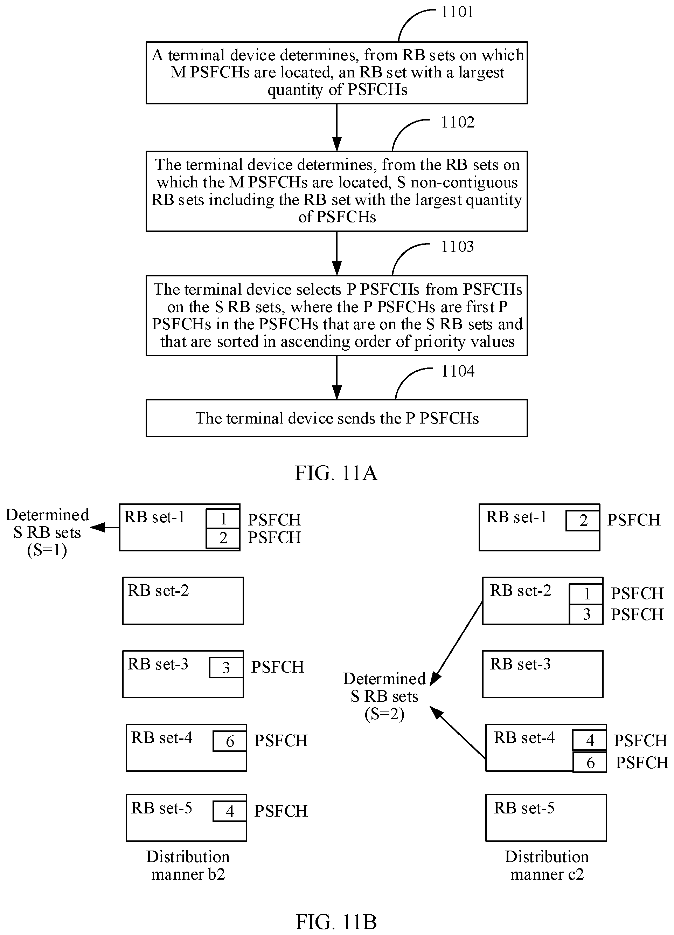

**Manner (3).** FIG. 11A shows a sidelink communication method according to an embodiment of this application. The method includes the following steps.

**Step 1101: A terminal device determines, from RB sets on which M PSFCHs are located, an RB set with a largest quantity of PSFCHs.**

**The terminal device determines a quantity of PSFCHs on each RB set in the RB sets on which the M PSFCHs are located, and determines the RB set with the largest quantity of PSFCHs from the RB sets.**

**Step 1102: The terminal device determines, from the RB sets on which the M PSFCHs are located, S non-contiguous RB sets including the RB set with the largest quantity of PSFCHs.**

After determining the RB set with the largest quantity of PSFCHs, the terminal device determines whether the RB sets on which the M PSFCHs are located include an RB set non-contiguous to the RB set with the largest quantity of PSFCHs.

If the RB sets on which the M PSFCHs are located do not include an RB set non-contiguous to the RB set with the largest quantity of PSFCHs, S is equal to 1, and the RB set determined by the terminal device is the RB set with the largest quantity of PSFCHs.

If the RB sets on which the M PSFCHs are located include an RB set non-contiguous to the RB set with the largest quantity of PSFCHs, S is greater than 1, the terminal device determines S non-contiguous RB sets, and the S RB sets include the RB set with the largest quantity of PSFCHs and the RB set non-contiguous to the RB set with the largest quantity of PSFCHs. If the RB sets on which the M PSFCHs are located include an RB set that is non-contiguous to the RB set non-contiguous to the RB set with the largest quantity of PSFCHs, the S RB sets further include the RB set that is non-contiguous to the RB set non-contiguous to the RB set with the largest quantity of PSFCHs.

The following describes a manner in which the terminal device determines the S RB sets with reference to a specific example. The distribution manners of the M PSFCHs shown in FIG. 9B are still used as an example.

Refer to FIG. 11B. When five PSFCHs are distributed in the distribution manner b2, the terminal device first determines an RB set with a largest quantity of PSFCHs, that is, determines the RB set-1 (including three PSFCHs). Because the RB sets on which the five PSFCHs are located do not include an RB set non-contiguous to the RB set-1, the terminal device determines one RB set (that is, S is equal to 1), and the RB set is the RB set-1.

Refer to FIG. 11B. When five PSFCHs are distributed in the distribution manner c2, the terminal device first determines an RB set with a largest quantity of PSFCHs, that is, determines the RB set-2 and the RB set-4. Because the RB set-2 and the RB set-4 are non-contiguous, the terminal device determines two non-contiguous RB sets (that is, S is equal to 2), and the two RB sets are respectively the RB set-2 and the RB set-4.

It should be noted that, if the RB sets on which the M PSFCHs are located include a plurality of RB sets with the largest quantity of PSFCHs, and the plurality of RB sets with the largest quantity of PSFCHs are contiguous, for any RB set with the largest quantity of PSFCHs, it is determined that a group of RB sets that include the RB set with the largest quantity of PSFCHs and include one RB set or at least two non-contiguous RB sets are found from the RB sets on which the M PSFCHs are located. In this way, a plurality of groups of RB sets are formed, and a group of RB sets with a largest quantity of PSFCHs are selected as the S RB sets; or a group of RB sets with a largest quantity of RB sets are selected as the S RB sets, a group of RB sets on which a PSFCH with a smallest priority value is located are selected as the S RB sets, or one group of RB sets are randomly selected as the S RB sets.

It can be learned from the foregoing example that when the terminal device determines that the RB sets on which the M PSFCHs are located include an RB set non-contiguous to the RB set with the largest quantity of PSFCHs, the S RB sets determined by the terminal device are a plurality of non-contiguous RB sets that include the RB set with the largest quantity of PSFCHs.

The terminal device ensures, through step 1102, that the S RB sets always include the RB set with the largest quantity of PSFCHs. Through step 1101 and step 1102, the terminal device determines the S RB sets from the RB sets on which the M PSFCHs are located. Then, the terminal device further determines finally sent PSFCHs from the S RB sets, that is, performs step 1103.

**Step 1103: The terminal device selects P PSFCHs from PSFCHs on the S RB sets, where the P PSFCHs are first P PSFCHs in the PSFCHs that are on the S RB sets and that are sorted in ascending order of priority values. A manner in which the terminal device performs step 1103 is similar to the manner in which the terminal device performs step 903. For details, refer to the foregoing descriptions. Details are not described herein again.**

### Step 1104: The terminal device sends the P PSFCHs.

In the embodiment shown in FIG. 11A, the terminal device determines the RB set with the largest quantity of PSFCHs from the RB sets on which the M PSFCHs are located, and then sends the PSFCHs on the S RB sets including the RB set. In this manner, the S RB sets determined by the terminal device include the RB set with the largest quantity of PSFCHs, so as to ensure that the S RB sets include a large quantity of PSFCHs and ensure that the terminal device can transmit as many PSFCHs as possible in a process of transmitting PSFCHs, and a PSFCH transmission process satisfies a capability of the terminal device for transmitting PSFCHs on contiguous frequency domain resources and/or non-contiguous frequency domain resources.

During actual application, the RB sets on which the M to-be-sent PSFCHs are located may be divided into a plurality of groups of RB sets, and each group of RB sets include one RB set or at least two non-contiguous RB sets. The terminal device selects a group of RB sets as the S RB sets. Embodiments of this application provide two sidelink communication methods, to determine a group of RB sets from the plurality of groups of RB sets as the S RB sets, and send PSFCHs on the determined S RB sets. For details, refer to Manner 4.

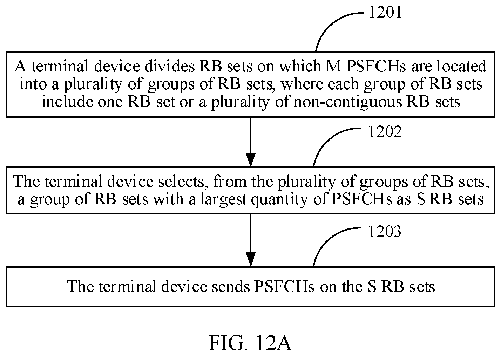

**Manner (4).** FIG. 12A shows a sidelink communication method according to an embodiment of this application. The method includes the following steps.

**Step 1201:** A **terminal device divides RB sets on which M PSFCHs are located into a plurality of groups of RB sets, where each group of RB sets include one RB set or a plurality of non-contiguous RB sets.**

The following describes a manner in which the terminal device divides the RB sets on which the M PSFCHs are located into a plurality of groups of RB sets with reference to a specific example. The distribution manners of the M PSFCHs shown in FIG. 9B are still used as an example.

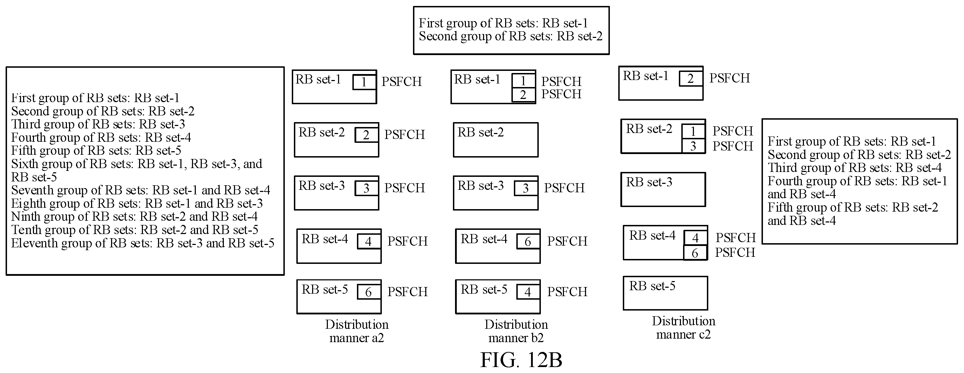

Refer to FIG. 12B. When five PSFCHs are distributed in the distribution manner a2, the terminal device divides the RB sets on which the M PSFCHs are located into eleven groups of RB sets, where a first group of RB sets include the RB set-1, a second group of RB sets include the RB set-2, a third group of RB sets include the RB set-3, a fourth group of RB sets include the RB set-4, a fifth group of RB sets include the RB set-5, a sixth group of RB sets include the RB set-1, the RB set-3, and the RB set-5, a seventh group of RB sets include the RB set-1 and the RB set-4, an eighth group of RB sets include the RB set-1 and the RB set-3, a ninth group of RB sets include the RB set-2 and the RB set-4, a tenth group of RB sets include the RB set-2 and the RB set-5, and an eleventh group of RB sets include the RB set-3 and the RB set-5.

Refer to FIG. 12B. When five PSFCHs are distributed in the distribution manner b2, the terminal device divides the RB sets on which the M PSFCHs are located into two groups of RB sets, where a first group of RB sets include the RB set-1, and a second group of RB sets include the RB set-2.

Refer to FIG. 12B. When five PSFCHs are distributed in the distribution manner c2, the terminal device divides the RB sets on which the M PSFCHs are located into five groups of RB sets, where a first group of RB sets include the RB set-1, a second group of RB sets include the RB set-2, a third group of RB sets include the RB set-4, a fourth group of RB sets include the RB set-1 and the RB set-4, and a fifth group of RB sets include the RB set-2 and the RB set-4.

It should be noted that, to cover all possible RB set combination manners, when the terminal device divides the RB sets on which the M PSFCHs are located into a plurality of groups of RB sets, the plurality of formed groups of RB sets are allowed to overlap, that is, one RB set may belong to a plurality of groups of RB sets. In addition, for any group of RB sets, any RB set included in the group of RB sets may be contiguous or may be non-contiguous to an RB set in the RB sets on which the M PSFCHs are located other than the group of RB sets.

**Step 1202: The terminal device selects, from the plurality of groups of RB sets, a group of RB sets with a largest quantity of PSFCHs as S RB sets.**

The terminal device compares quantities of PSFCHs on the groups of RB sets, and the group of RB sets with the largest quantity of PSFCHs are the S RB sets.

If the plurality of groups of RB sets include only one group of RB sets with the largest quantity of PSFCHs, for ease of description, the group of RB sets with the largest quantity of PSFCHs in the plurality of groups of RB sets are referred to as a third candidate group, that is, the plurality of groups of RB sets include one third candidate group. The terminal device may directly use the third candidate group as the S RB sets.

The following describes a manner in which the terminal device selects the S RB sets with reference to a specific example. The distribution manners of the M PSFCHs shown in FIG. 9B are still used as an example.

When five PSFCHs are distributed in the distribution manner a2, the terminal device divides the RB sets on which the M PSFCHs are located into eleven groups of RB sets, where the eleven groups of RB sets include only one third candidate group, the third candidate group is the sixth group of RB sets, and the terminal device selects the sixth group of RB sets as the S RB sets.

If the plurality of groups of RB sets include a plurality of third candidate groups, the terminal device may select one third candidate group from the plurality of third candidate groups as the S RB sets.

This embodiment of this application provides two manners of selecting one third candidate group from the plurality of third candidate groups as the S RB sets. The following separately describes the manners.

Selection manner 1. The terminal device selects, from the plurality of third candidate groups, a third candidate group with a largest quantity of RB sets as the S RB sets.

The terminal device compares quantities of RB sets in the third candidate groups, and the RB sets included in the third candidate group with the largest quantity of RB sets are the S RB sets.

Selection manner 2. The terminal device selects, from the plurality of third candidate groups, a third candidate group on which a PSFCH with a smallest priority value is located as the S RB sets. Herein, a comparison range of the smallest priority value is priority values of all PSFCHs on the plurality of third candidate groups.

The terminal device determines the priority values of the PSFCHs on the third candidate groups, and RB sets included in the third candidate group on which the PSFCH with the smallest priority value is located are the S RB sets.

Selection manner 3. The terminal device selects, from the plurality of third candidate groups, a third candidate group on which an RB set with a largest quantity of PSFCHs is located as the N RB sets.

The terminal device compares a quantity of PSFCHs on each RB set in each third candidate group, and determines an RB set with a largest quantity of PSFCHs. The third candidate group on which the RB set with the largest quantity of PSFCHs is located is the S RB sets.

Selection manner 4. The terminal device randomly selects one third candidate group or randomly selects one third candidate group from the plurality of third candidate groups as the N RB sets.

Through step 1201 and step 1202, the terminal device determines the S RB sets, and the terminal device may send PSFCHs on the S RB sets, that is, perform step 1203.

**Step 1203: The terminal device sends the PSFCHs on the S RB sets. When the terminal device sends the PSFCHs on the S RB sets, the terminal device may send all of the PSFCHs on the S RB sets, or may send a part of the PSFCHs on the S RB sets.**

When performing step 1203, the terminal device may select P PSFCHs from the PSFCHs on the S RB sets, where the P PSFCHs are first P PSFCHs in the PSFCHs that are on the S RB sets and that are sorted in ascending order of priority values.

The terminal device sorts the PSFCHs on the S RB sets in ascending order of priority values, and selects the first P PSFCHs from the sorted PSFCHs. The P PSFCHs need to satisfy a limitation on a maximum PSFCH transmit quantity of the terminal device and maximum PSFCH transmit power of the terminal device. To be specific, P is not greater than the maximum PSFCH transmit quantity of the terminal device, and total power of the P PSFCHs is not greater than the maximum PSFCH transmit power of the terminal device.

After the terminal device selects the P PSFCHs from the PSFCHs on the S RB sets, the terminal device sends the P PSFCHs.

In the embodiment shown in FIG. 12A, the terminal device groups the RB sets on which the M PSFCHs are located, uses a group of RB sets with a largest quantity of PSFCHs as the S RB sets, and sends the PSFCHs on the S RB sets. In this manner, the S RB sets determined by the terminal device include a large quantity of PSFCHs, so as to ensure that the terminal device can transmit as many PSFCHs as possible in a process of transmitting PSFCHs, and a PSFCH transmission process satisfies a capability of the terminal device for transmitting PSFCHs on contiguous frequency domain resources and/or non-contiguous frequency domain resources.

The foregoing Manner 4 is merely an example. In Manner 4, when performing step 1202, the terminal device selects a group of RB sets with the largest quantity of PSFCHs as the S RB sets. In a possible implementation, the terminal device may alternatively select, from the plurality of groups of RB sets, a group of RB sets with a largest quantity of RB sets as the S RB sets.

In addition, an execution occasion of the embodiment shown in FIG. 9A, FIG. 10A, FIG. 11A, or FIG. 12A is not limited in embodiments of this application. For example, after performing LBT, the terminal device may perform the embodiment shown in FIG. 9A, FIG. 10A, FIG. 11A, or FIG. 12A on RB sets on which the M PSFCHs are located and on which LBT is successfully performed. For another example, when performing the embodiment shown in FIG. 9A, FIG. 10A, FIG. 11A, or FIG. 12A, after determining the N RB sets, the terminal device performs LBT on the determined N RB sets, and then sends the PSFCHs on an RB set on which LBT is successfully performed in the N RB sets.

It may be understood that, to implement the functions in the foregoing embodiments, the terminal device includes corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

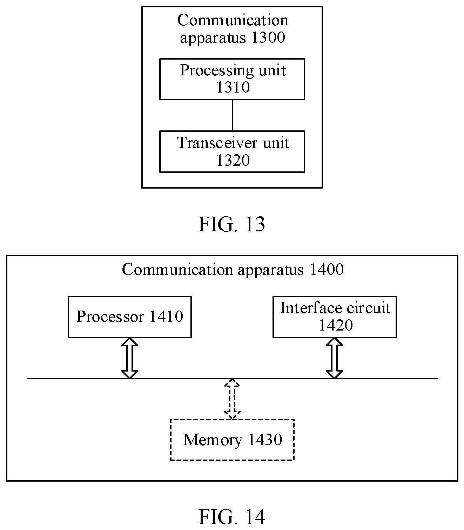

FIG. 13 and FIG. 14 are diagrams of structures of possible communication apparatuses according to embodiments of this application. These communication apparatuses may be configured to implement functions of the terminal device in the foregoing method embodiments. Therefore, beneficial effects of the foregoing method embodiments can also be achieved. In embodiments of this application, the communication apparatus may be the terminal device shown in FIG. 1 or FIG. 2, or may be a module (for example, a chip) of the terminal device shown in FIG. 1 or FIG. 2.

As shown in FIG. 13, a communication apparatus 1300 includes a processing unit 1310 and a transceiver unit 1320. The communication apparatus 1300 may be configured to implement functions of the terminal device in the method embodiment shown in FIG. 3, FIG. 4A, FIG. 5A, FIG. 6A, or FIG. 7A.

When the communication apparatus 1300 is configured to implement the functions of the terminal device in the method embodiment shown in FIG. 3, FIG. 4A, FIG. 5A, FIG. 6A, or FIG. 7A, the processing unit 1301 is configured to: determine M to-be-sent PSFCHs, and determine N RB sets from RB sets on which the M PSFCHs are located, where N is a positive integer, and when N is greater than 1, the N RB sets are contiguous RB sets; and send PSFCHs on the N RB sets through the transceiver unit 1320.

In a possible implementation, the N RB sets include an RB set on which a PSFCH with a smallest priority value in the M PSFCHs is located.

In a possible implementation, when the communication apparatus 1300 is configured to implement the functions of the terminal device in the method embodiment shown in FIG. 3, FIG. 4A, FIG. 5A, FIG. 6A, or FIG. 7A, the processing unit 1310 is specifically configured to:
select P PSFCHs from the PSFCHs on the N RB sets, where the P PSFCHs are first P PSFCHs in the PSFCHs that are on the N RB sets and that are sorted in ascending order of priority values; and send the P PSFCHs through the transceiver unit 1320.

In a possible implementation, when the communication apparatus 1300 is configured to implement the functions of the terminal device in the method embodiment shown in FIG. 3, FIG. 4A, FIG. 5A, FIG. 6A, or FIG. 7A, the processing unit 1310 is specifically configured to:
perform LBT on the N RB sets, and determine a first resource group based on an RB set on which LBT is successfully performed in the N RB sets, where the first resource group includes one RB set or a plurality of contiguous RB sets; and
select P PSFCHs from PSFCHs on the first resource group, where the P PSFCHs are first P PSFCHs in the PSFCHs that are on the first resource group and that are sorted in ascending order of priority values.

In a possible implementation, when the communication apparatus 1300 is configured to implement the functions of the terminal device in the method embodiment shown in FIG. 3, FIG. 4A, FIG. 5A, FIG. 6A, or FIG. 7A, the processing unit 1310 is specifically configured to:
perform LBT on RB sets on which the P PSFCHs are located, and determine a second resource group based on an RB set on which LBT is successfully performed in the RB sets on which the P PSFCHs are located, where the second resource group includes one RB set or a plurality of contiguous RB sets; and send PSFCHs on the second resource group through the transceiver unit 1320.

In a possible implementation, when the communication apparatus 1300 is configured to implement the functions of the terminal device in the method embodiment shown in FIG. 3, FIG. 4A, FIG. 5A, FIG. 6A, or FIG. 7A, the processing unit 1301 is configured to: select Q PSFCHs from the M PSFCHs, where the Q PSFCHs are first Q PSFCHs in the M PSFCHs that are sorted in ascending order of priority values; and determine the N RB sets from RB sets on which the Q PSFCHs are located.

In a possible implementation, when the communication apparatus 1300 is configured to implement the functions of the terminal device in the method embodiment shown in FIG. 3, FIG. 4A, FIG. 5A, FIG. 6A, or FIG. 7A, the processing unit 1301 is configured to: perform LBT on the RB sets on which the Q PSFCHs are located, and determine the N RB sets based on an RB set on which LBT is successfully performed in the RB sets on which the Q PSFCHs are located.

In a possible implementation, when the communication apparatus 1300 is configured to implement the functions of the terminal device in the method embodiment shown in FIG. 3, FIG. 4A, FIG. 5A, FIG. 6A, or FIG. 7A, the processing unit 1301 is configured to: perform LBT on the N RB sets, and determine a third resource group based on an RB set on which LBT is successfully performed in the N RB sets, where the third resource group includes one RB set or a plurality of contiguous RB sets; and send PSFCHs on the third resource group through the transceiver unit 1320.

In a possible implementation, the RB sets on which the M PSFCHs are located include a plurality of groups of RB sets, each group of RB sets include one RB set or at least two contiguous RB sets, the N RB sets are a group of RB sets with a largest quantity of RB sets in the plurality of groups of RB sets, and the RB set that forms an independent group is non-contiguous to an RB set in the RB sets on which the M PSFCHs are located other than the RB set.

In a possible implementation, the RB sets on which the M PSFCHs are located include a plurality of groups of RB sets, each group of RB sets include one RB set or at least two contiguous RB sets, the N RB sets are a group of RB sets with a largest quantity of PSFCHs in the plurality of groups of RB sets, and the RB set that forms an independent group is non-contiguous to an RB set in the RB sets on which the M PSFCHs are located other than the RB set.

In a possible implementation, the RB sets on which the M PSFCHs are located are RB sets on which LBT is successfully performed.

As shown in FIG. 13, a communication apparatus 1300 includes a processing unit 1310 and a transceiver unit 1320. The communication apparatus 1300 may be configured to implement functions of the terminal device in the method embodiment shown in FIG. 8, FIG. 9A, FIG. 10A, FIG. 11A, or FIG. 12A.

When the communication apparatus 1300 is configured to implement the functions of the terminal device in the method embodiment shown in FIG. 8, FIG. 9A, FIG. 10A, FIG. 11A, or FIG. 12A, the processing unit 1301 is configured to: determine M to-be-sent PSFCHs, and determine S RB sets from RB sets on which the M PSFCHs are located, where S is a positive integer, and when S is greater than 1, the S RB sets are non-contiguous RB sets; and send PSFCHs on the S RB sets through the transceiver unit 1320.

In a possible implementation, the S RB sets include a first RB set, and the first RB set is an RB set on which a PSFCH with a smallest priority value in the M PSFCHs is located.

In a possible implementation, when the communication apparatus 1300 is configured to implement the functions of the terminal device in the method embodiment shown in FIG. 8, FIG. 9A, FIG. 10A, FIG. 11A, or FIG. 12A, the processing unit 1301 is configured to: select P PSFCHs from the PSFCHs on the S RB sets, where the P PSFCHs are first P PSFCHs in the PSFCHs that are on the S RB sets and that are sorted in ascending order of priority values; and send the P PSFCHs through the transceiver unit 1320.

In a possible implementation, when the communication apparatus 1300 is configured to implement the functions of the terminal device in the method embodiment shown in FIG. 8, FIG. 9A, FIG. 10A, FIG. 11A, or FIG. 12A, the processing unit 1301 is configured to: select Q PSFCHs from the M PSFCHs, where the Q PSFCHs are first Q PSFCHs in the M PSFCHs that are sorted in ascending order of priority values; and determine the S RB sets from RB sets on which the Q PSFCHs are located.

In a possible implementation, the S RB sets include a second RB set, and the second RB set is an RB set on which a PSFCH with a smallest priority value is located in an RB set non-contiguous to the first RB set.

In a possible implementation, the S RB sets include an RB set with a largest quantity of PSFCHs in the RB sets on which the M PSFCHs are located.

In a possible implementation, the RB sets on which the M PSFCHs are located include a plurality of groups of RB sets, each group of RB sets include one RB set or at least two non-contiguous RB sets, and the S RB sets are a group of RB sets with a largest quantity of PSFCHs in the plurality of groups of RB sets.

As shown in FIG. 14, a communication apparatus 1400 includes a processor 1410 and an interface circuit 1420. The processor 1410 and the interface circuit 1420 are coupled to each other. It can be understood that the interface circuit 1420 may be a transceiver or an input/output interface. Optionally, the communication apparatus 1400 may further include a memory 1430, configured to: store instructions executed by the processor 1410, store input data needed for running instructions by the processor 1410, or store data generated after the processor 1410 runs instructions.

When the communication apparatus 1400 is configured to implement the method shown above, the processor 1410 is configured to implement functions of the processing unit 1310, and the interface circuit 1420 is configured to implement functions of the transceiver unit 1320.

When the communication apparatus is a chip used in a terminal, the chip in the terminal implements functions of the terminal device in the foregoing method embodiments. That the chip in the terminal receives information from another apparatus (for example, a terminal apparatus or a network apparatus) may be understood as that the information is first received by another module (for example, a radio frequency module or an antenna) in the terminal, and then sent by the module to the chip in the terminal. That the chip in the terminal sends information to another apparatus (for example, a terminal apparatus or a network apparatus) may be understood as that the information is first sent to another module (for example, a radio frequency module or an antenna) in the terminal, and then the module sends the information to the another apparatus (for example, the terminal apparatus or the network apparatus).

In this application, that an entity A sends information to an entity B may be that A directly sends the information to B, or may be that A indirectly sends the information to B via another entity. Similarly, that the entity B receives information from the entity A may be that the entity B directly receives the information sent by the entity A, or may be that the entity B indirectly receives the information sent by the entity A via another entity.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium and write information into the storage medium. The storage medium may alternatively be a component of the processor. The processor and the storage medium may be located in an ASIC. In addition, the ASIC may be located in a terminal. The processor and the storage medium may alternatively exist as discrete components in a terminal.

All or a part of the foregoing embodiments may be implemented by using software, hardware, firmware, or any combination thereof. When software is used to implement the foregoing embodiments, all or a part of the foregoing embodiments may be implemented in a form of a computer program product. The computer program product includes one or more computer programs or instructions. When the computer program or the instructions are loaded and executed on a computer, all or a part of procedures or functions in embodiments of this application are performed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible by the computer, or a data storage device, such as a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions of different embodiments are consistent and may be mutually referenced, and technical features in different embodiments may be combined based on an internal logical relationship thereof to form a new embodiment.

In this application, "at least one" means one or more, and "a plurality of" means two or more. "And/or" describes an association relationship between associated objects and indicates that three relationships may exist. For example, A and/or B may indicate the following cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers (for example, digital numbers "first" and "second") in embodiments of this application are merely used for differentiation for ease of description, and are not used to limit the scope of embodiments of this application. Sequence numbers (for example, step numbers in the method embodiments) of the foregoing processes do not mean an execution sequence. The execution sequence of the steps may be different from those of the steps provided in embodiments of this application, and the execution sequence of the processes should be determined based on functions and internal logic of the processes. The steps in embodiments provided in this application may be used as optional steps. Embodiments of this application provide several possible implementations. During actual application, some steps in the foregoing embodiments may not be performed.

## Claims

1. A sidelink communication method, wherein the method comprises:
determining M to-be-sent physical sidelink feedback channels PSFCHs;
determining N resource block sets RB sets from RB sets on which the M PSFCHs are located, wherein N is a positive integer, and when N is greater than 1, the N RB sets are contiguous RB sets; and
sending PSFCHs on the N RB sets.

2. The method according to claim 1, wherein the N RB sets comprise an RB set on which a PSFCH with a smallest priority value in the M PSFCHs is located.

3. The method according to either of claims 1 and 2, wherein the sending the PSFCHs on the N RB sets comprises:
selecting P PSFCHs from the PSFCHs on the N RB sets, wherein the P PSFCHs are first P PSFCHs in the PSFCHs that are on the N RB sets and that are sorted in ascending order of priority values; and
sending the P PSFCHs.

4. The method according to claim 3, wherein the selecting the P PSFCHs from the PSFCHs on the N RB sets comprises:
performing listen before talk LBT on the N RB sets, and determining a first resource group based on an RB set on which LBT is successfully performed in the N RB sets, wherein the first resource group comprises one RB set or a plurality of contiguous RB sets; and
selecting P PSFCHs from PSFCHs on the first resource group, wherein the P PSFCHs are first P PSFCHs in the PSFCHs that are on the first resource group and that are sorted in ascending order of priority values.

5. The method according to claim 3, wherein the sending the P PSFCHs comprises:
performing LBT on RB sets on which the P PSFCHs are located, and determining a second resource group based on an RB set on which LBT is successfully performed in the RB sets on which the P PSFCHs are located, wherein the second resource group comprises one RB set or a plurality of contiguous RB sets; and
sending PSFCHs on the second resource group.

6. The method according to either of claims 1 and 2, wherein the determining the N resource block sets RB sets from the RB sets on which the M PSFCHs are located comprises:
selecting Q PSFCHs from the M PSFCHs, wherein the Q PSFCHs are first Q PSFCHs in the M PSFCHs that are sorted in ascending order of priority values; and
determining the N RB sets from RB sets on which the Q PSFCHs are located.

7. The method according to claim 6, wherein the determining the N RB sets from the RB sets on which the Q PSFCHs are located comprises:
performing LBT on the RB sets on which the Q PSFCHs are located, and determining the N RB sets based on an RB set on which LBT is successfully performed in the RB sets on which the Q PSFCHs are located.

8. The method according to claim 6, wherein the sending the PSFCHs on the N RB sets comprises:
performing LBT on the N RB sets, and determining a third resource group based on an RB set on which LBT is successfully performed in the N RB sets, wherein the third resource group comprises one RB set or a plurality of contiguous RB sets; and
sending PSFCHs on the third resource group.

9. The method according to any one of claims 1 to 8, wherein the RB sets on which the M PSFCHs are located comprise a plurality of groups of RB sets, each group of RB sets comprise one RB set or at least two contiguous RB sets, the N RB sets are a group of RB sets with a largest quantity of RB sets in the plurality of groups of RB sets, and the RB set that forms an independent group is non-contiguous to an RB set in the RB sets on which the M PSFCHs are located other than the RB set.

10. The method according to any one of claims 1 to 8, wherein the RB sets on which the M PSFCHs are located comprise a plurality of groups of RB sets, each group of RB sets comprise one RB set or at least two contiguous RB sets, the N RB sets are a group of RB sets with a largest quantity of PSFCHs in the plurality of groups of RB sets, and the RB set that forms an independent group is non-contiguous to an RB set in the RB sets on which the M PSFCHs are located other than the RB set.

11. The method according to any one of claims 1 to 9, wherein the RB sets on which the M PSFCHs are located are RB sets on which LBT is successfully performed.

12. A sidelink communication method, wherein the method comprises:
determining M to-be-sent physical sidelink feedback channels PSFCHs;
determining S resource block sets RB sets from RB sets on which the M PSFCHs are located, wherein S is a positive integer, and when S is greater than 1, the S RB sets are non-contiguous RB sets; and
sending PSFCHs on the S RB sets.

13. The method according to claim 12, wherein the S RB sets comprise a first RB set, and the first RB set is an RB set on which a PSFCH with a smallest priority value in the M PSFCHs is located.

14. The method according to either of claims 12 and 13, wherein the sending the PSFCHs on the S RB sets comprises:
selecting P PSFCHs from the PSFCHs on the S RB sets, wherein the P PSFCHs are first P PSFCHs in the PSFCHs that are on the S RB sets and that are sorted in ascending order of priority values; and
sending the P PSFCHs.

15. The method according to either of claims 12 and 13, wherein the determining the S resource block sets RB sets from the RB sets on which the M PSFCHs are located comprises:
selecting Q PSFCHs from the M PSFCHs, wherein the Q PSFCHs are first Q PSFCHs in the M PSFCHs that are sorted in ascending order of priority values; and
determining the S RB sets from RB sets on which the Q PSFCHs are located.

16. The method according to claim 15, wherein the S RB sets comprise a second RB set, the second RB set is an RB set on which a PSFCH with a smallest priority value is located in an RB set non-contiguous to the first RB set, and S is an integer greater than or equal to 2.

17. The method according to any one of claims 12 to 16, wherein the S RB sets comprise an RB set with a largest quantity of PSFCHs in the RB sets on which the M PSFCHs are located.

18. The method according to any one of claims 12 to 16, wherein the RB sets on which the M PSFCHs are located comprise a plurality of groups of RB sets, each group of RB sets comprise one RB set or at least two non-contiguous RB sets, and the S RB sets are a group of RB sets with a largest quantity of PSFCHs in the plurality of groups of RB sets.

19. A communication apparatus, comprising a processor, wherein the processor is configured to implement the method according to any one of claims 1 to 11 or the method according to any one of claims 12 to 18 by using a logic circuit or executing code instructions.

20. A communication apparatus, comprising a module configured to perform the method according to any one of claims 1 to 11 and a module configured to perform the method according to any one of claims 12 to 18.

21. A chip system, comprising a processor, wherein the processor is configured to execute a computer-executable program, to cause a device on which the chip system is installed to perform the method according to any one of claims 1 to 11 or perform the method according to any one of claims 12 to 18.

22. A computer-readable storage medium, wherein the storage medium stores a computer program or instructions; and when the computer program or the instructions are executed by a communication apparatus, the method according to any one of claims 1 to 11 or the method according to any one of claims 12 to 18 is implemented.

23. A computer program product, wherein the computer program product stores a computer program, the computer program comprises program instructions; and when the program instructions are executed by a computer, the computer is caused to perform the method according to any one of claims 1 to 11 or the method according to any one of claims 12 to 18.
